(19) Europäisches Patentamt
European Patent Office
Office européen des brevets

(11) **EP 2 572 581 A1**

(12) **DEMANDE DE BREVET EUROPEEN**

(43) Date de publication:
**27.03.2013 Bulletin 2013/13**

(51) Int Cl.:
*A01N 63/00* (2006.01)   *C05C 11/00* (2006.01)
*C05G 3/02* (2006.01)   *C05F 11/08* (2006.01)
*A01C 21/00* (2006.01)   *A01P 3/00* (2006.01)

(21) Numéro de dépôt: 12366001.1

(22) Date de dépôt: **11.09.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **26.09.2011 FR 1102945**

(71) Demandeur: **Polyor SARL**
**54000 Nancy (FR)**

(72) Inventeur: **Polyor SARL**
**54000 Nancy (FR)**

(54) **Renforcement azoté d'engrais foliaires thérapeutiques**

(57) *Fertilisation-foliaire thérapeutique azotée* (FFTN) comprenant *l'application* une dose d'engrais azoté, Nf, comprise entre 0,25 et 8,0 kg-N/ha et une surdose d'azote, ∆Nf, renforcée à de dNf permettant de dépasser un *indice de nutrition azotée* (NNI) de 1,00 applicable aux cultures agronomiques et/ou fourragères comprenant l'utilisation d'inocula d'un ou de microorganismes saprophytes **iSapro**. iPathos (infestation phytopathologique) est ici décrite par une fonction [iPathos : **NNI**] *translatée* par rapport à une fonction témoin. Le coefficient (b) de ladite fonction [iPathos : **NNI**] ayant la forme [iPathos = (b) x **NNI** - (a)] est inchangé, et le coefficient (a) ne représente avantageusement qu'entre de 75 à 95% de celui de la fonction témoin. Cette FFTN peut aussi comprendre ∆Nf renforcée de dNf avec utilisation d'**iSapro(N)**, la réduction d'iPathos étant ici décrite par une fonction *translatée et transformée* par rapport à la courbe témoin. Les coefficients (a) et (b) ne représentent ici avantageusement qu'entre 75 à 95% (a) et 50 à 85% (b) de ceux de la fonction témoin. iSapro(N) peut aussi translater et transformer la fonction [iPathos : **NNI**] témoin de manière à ce que les susdits coefficients ne représentent avantageusement qu'entre de 75 à 95% (a) 50 et 90% (b) ; dans ce cas la fonction translatée et transformée est non linéaire, voire de la forme [iPathos = (b) x Log(**NNI**) - (a)]. iPathos est le fait d'un ou de microorganismes nécrotrophes, et ∆Nf et dNf représentent environs 5% de Nf chacun.

Figure 3 :

**Description**

**DOMAINE TECHNIQUE DE L'INVENTION**

Engrais foliaires, notamment azotés. Il est question d'agrobiologie et de *lutte intégrée* contre les pathogènes, notamment au moyen de *fertilisation-foliaire thérapeutique* (FFT).

**ÉTAT DE LA TECHNIQUE**

La fertilisation foliaire, azotée notamment, est utile en conditions de faibles pluviométrie parce qu'elle ne requiert pas la dissolution des sels azotés dans la solution du sol pour être directement absorbé par la plante. Actuellement les doses - hectare d'engrais N - foliaire vont de 0,25 kg à 8, voire 20 à 30 kg-N/ha avec certains adjuvants et/ou *agents azoto - nutritionnels.* Or, la fertilisation foliaire, notamment azotée, et la régie phytosanitaire des cultures sont rarement associées, et pour causes. Bien qu'une plante carencée soit moins résistantes à des pathogènes virulents, l'apport d'engrais N, par voie foliaire notamment, peuvent accroître les dégrées d'infestation, d'incidence et/ou de sévérité de divers pathogènes. Accroître les apports d'engrais N par voie foliaire comporter donc toujours un risque phytosanitaire.

*Fertilisation raisonnée (FR) et indice de nutrition azotée (NNI) ; dépasser NNI = 1, 00 ?*

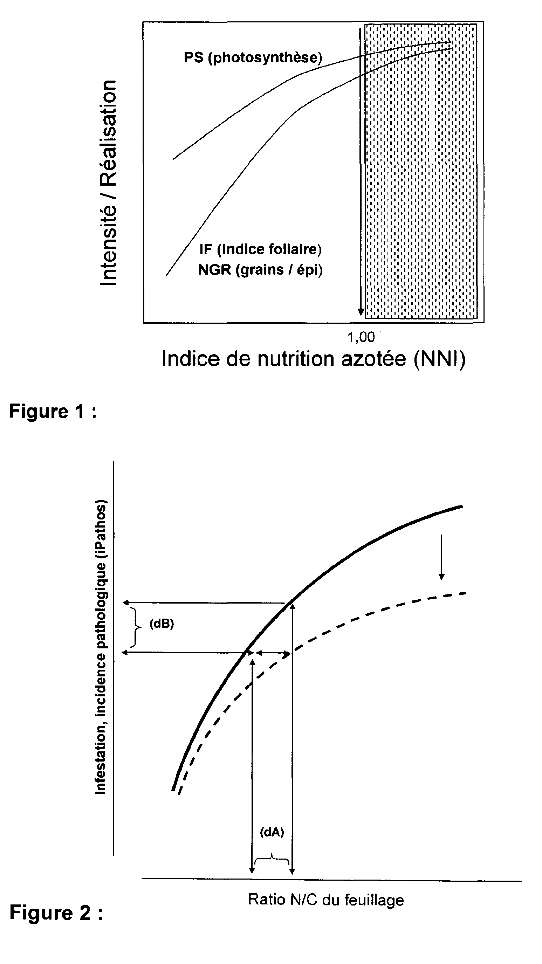

La FR est réalisable à l'aide de *l'indice de nutrition azotée* (NNI ; Gastal et Lemaire 2002 et Jeuffroy et al. 2002 ; Justes et al. 1994, Colnenne et al. 1998, Devienne et Barret et al. 2000). Un NNI de 1,00 indique que les teneurs en N des biomasses aériennes sont optimales. NNI est le rapport entre la teneur en $N_{total}$ de la biomasse aérienne (aussi : $N_{actuel}$) et la teneur *critique* en N de cette même biomasse ($N_{critique}$), cette dernière valeur étant une fonction directe de la quantité de biomasse produite au stade de croissance donné. NNI est le plus facilement estimable via une simple mesure indirecte de la teneur en chlorophylle à l'aide d'un appareil photométrique - le plus souvent le modèle SPAD™ (Ziadi et al. 2008, Hawkins et al. 2007, Blackmer et al. 1994, Argenta et al. 2004, Markwell et al. 1995), ou encore via la méthode Jubil™ basé sur les teneurs en nitrate des jus de bas de tige ; la suraccumulation de nitrates indiquant qu'il faut faire l'impasse d'une partie ou de la totalité des ultimes apports d'engrais N initialement préconisés.
Or, le dépassement d'NNI = 1,00 est souhaitable puisque qu'il représente un garant protéique et un plus haut potentiel de rendement. En effet, et bien que NNI est fonction de la capacité photosynthétique, le rendement agronomique est aussi fonction de la taille des *puits,* que sont le nombre de feuilles, pétioles, talles, *etc.* chez les herbacées, et le nombre de fleurs et/ou d'épillets fertiles chez les graminées. Or, à NNI ≈ 1,00, le degré de réalisation de la capacité de tels puits est inférieur à celui des sources (Figure 1 ; cf. Gastal et Lemaire 2002). Le dépassement de NNI ≈ 1,00 - au risque d'entraîner une accumulation des nitrates *in planta* (Juste et al. 1994), permet donc d'augmenter le potentiel de rendement. De plus, l'augmentation des teneurs en N du feuillage est souvent associé à une augmentation de l'incidence et de l'intensité phytopathologique, d'où un accroissement des *risques* phytosanitaires.

*Phytopathogènes necro-, bio- et hemi-biotrophes*

Les pathogènes nécrotrophes tuent les cellules végétales et s'alimentent de leurs restes (Friesen et al. 2008), tandis que les pathogènes biotrophes colonisent sans tuer immédiatement ces cellules (Glazebrook 2005, Oliver et Ipcho 2004). Une fois ces dernières définitivement détruites, le pathogène initialement biotrophe peut parfois changer de « mode de vie » et devenir nécrotrophe ; on parle alors de pathogènes hemibiotrophes. Les *biotrophes* sont stoppés par la formation de *nécroses localisées* empêchant ainsi le pathogène de passer vers la ou les cellules voisines ; on parle alors *réactions hypersensitives* (HR). Les *nécrotrophes* eux induisent une réaction systémique ; on parle plus ici stimulation ou « élicitation » des défenses naturelles.

*Détournement (hijacking) des réactions HR par les necrotrophes*

Les *nécroses localisées* HR sont parfois détournées par des nécrotrophes opportunistes (Gorvin et Levine 2000, Hammond-Kosack et Rudd 2008, Kliebenstein et Rowe 2008). Ces derniers profitent de ces nécroses, pourtant très effectives contre les biotrophes, comme points d'entré (Kéon et al. 2007, Lorang et al. 2007). Donc, plus ces nécroses sont nombreuses ou étendues, plus le risque de telles « co-infections » est grand. La plante doit donc modérer ses défenses de type HR, quitte à subir une certaine infestation biotrophes, afin d'éviter de trop importantes infections nécrotrophes opportunistes (Kliebenstein et Rowe 2008). Pire, la fertilisation N excessive favorise le développement de pathologies biotrophes, et donc les nécroses localisées HR qui en résulte, d'où un risque d'opportunisme nécrotrophique d'autant plus grand si NNI dépasse 1,00.

*La fertilisation N foliaire augmente le ratio N/C, mais aussi iPathos*

En effet, l'augmentation de *l'intensité pathologique* (iPathos) est souvent liée à la fertilisation N (Neumann et al. 2004, Pitchay et al. 2007, Shaner et Finney 1977, Tavernier et al. 2007, Lecompte et al. 2010, Wilcoxon 1980) ; schématiquement, voir la Figure 2. Bien que certains auteurs (eg. Lecompte et al. 2010, Hoffland et al. 1999) rapportent parfois qu'une plante (tomate) sévèrement carencé en N est plus affectée - notamment par un nécrotrophe tel que *Botrytis cinerea,* la relation entre diminution du rapport C/N et pathogénécité est assez répandue en situations agronomique et viticole où la fertilisation N est suffisante pour être non limitante. Pourtant, la fertilisation foliaire N doit réduire le rapport C/N du feuillage, la contre-productivité phytosanitaire des engrais foliaire azotés est donc à craindre. A noter : la progression d'iPathos en fonction de N/C, et donc accessoirement de NNI, est plus accentuée pour les pathogène biotrophes telles que celles de *Puccinia striiformis* (Neumann et al. 2004, Ash et Brown 1991) sur blé, que necrotrophes telles que celles de *Botrytis cinerea* (Lecompte et al. 2010, Pitchay et al. 2007) sur tomate. En effet, selon Tavernier et al. 2007 et Jensen et Munk 1997, les pathogènes biotrophes sont plus affectés par l'augmentation de N/C du feuillage que les pathogènes nécrotrophes qui eux peuvent mobiliser différentes sources d'N en détruisant les parois.

*Atténuation de iPathos ; état de la technique*

A priori, et à la lumière de l'état de la technique, l'homme du métier peut chercher à atténuer cette augmentation d'iPathos attribuable à une augmentation d'NNI.

*Atténuation Chimique :* L'augmentation d'iPathos suite à celle d'NNI pourrait être atténuée à l'aide de pesticides mélangés à la bouille d'engrais N foliaire. Or, de tels traitements chimiques présuppose qu'iPathos eut été diagnostiqué, de tels traitements n'étant pas préventifs, et appliqués qu'après l'apparition des premiers symptômes et/ou la constatation d'une augmentation d'iPathos.

*Atténuation Saprophytique :* L'apport d'un microorganisme saprophyte avec l'engrais N foliaire aurait pu contrer l'augmentation d'iPathos suite à l'augmentation d'NNI. Or, cela est contraire aux attentes de l'homme du métier microbiologique. En effet, celui-ci préconisera nécessairement un raisonnement de NNI, en dessus de 1,00 s'il le faut, afin de minimiser iPathos.

*Atténuation Thérapeutique :* La notion de « *foliar fertilizer therapy* » (fertilisation foliaire thérapeutique, ou FFT ; Reuveni et Reuveni 1998, 1995, Reuveni et al. 1995, 1996, 1997) existe. Or, et bien qu'accessoirement quelques unités d'azote sont apportées occasionnellement, FFT préconise essentiellement que l'apport de sels potassiques et/ou phosphatés. Ce sont ces éléments, et non l'azote, qui sont ici mis à contribution. Malgré l'existence de ce concept dit FFT, l'optimum d'engrais N foliaire demeure limité par et pour des raisons phytosanitaires.

Cela dit, s'il est vrai que la réaction d'iPathos à des variations de teneurs en azote des parties aériennes des cultures est variable, c'est bel et bien cette variabilité qui cause ici problème. Le maintient, voire la diminution d'iPathos avec l'augmentation de ces teneurs en N ne contribuent en riens au risque phytosanitaire ; c'est l'augmentation d'iPathos en de telles situations, même si elle n'est pas toujours nécessairement réalisée, qui constitue en soi un risque inacceptable pour l'agriculteur. Dans la mesure où l'augmentation des teneurs histologiques en N ne peut pas maintenir ou réduire iPathos, il y a donc un véritable problème technique. En ce sens, Lecompte et al. 2010, Tavernier et al. 2007, Pitchay et al. 2007 et/ou Neumann et al. 2004, lorsque et si ils mentionnent que la teneur en N des tissus aériens n'affectent pas, voire réduit, iPathos, il n'est jamais véritablement question d'NNI, i.e. un mesure objective de l'état de la nutrition azotée de la plante ou culture. En effet, si la culture/plante est carencée en N (NNI < 1,00), une augmentation de la fertilisation pourrait réduire iPathos ; *in contrario,* si l'alimentation en N de la culture/plante n'est plus limitative (NNI > 1,00), une fertilisation N plus intense devrait augmenter iPathos. Le risque phytosanitaire augmente donc si les teneurs histologiques d'N dépassent celles strictement requises afin d'assurer un plein rendement de biomasses aériennes, *i.e.* NNI = 1,00.

Du coup, il n'est pas évident pour l'homme du métier d'ajouter un agent de biocontrôle, microorganisme et/ou stimulateur de défenses naturelles, à une fertilisation azotée, encore moins surdosée, sensée augmenter NNI. En effet, l'efficacité relative de tels agents de biocontrôle décroît lorsque iPathos "déborde", vint en sorte, un traitement fongicide témoin conventionnel (Ji et *al.* 2006, Johnson *et al.* 1993 et Yohalem *et al.* 2007). Si iPathos outrepasse la protection fongicide chimique apportée en combinaison à d'éventuels agents de biocontrôles, ces derniers étant rarement apportés comme seule moyen de lutte, l'efficacité relative de tels agents (micro)biologiques décroît. **L'agriculteur** observera attentivement ce témoin fongicide afin d'évaluer la tenue de son programme de lutte contre les phytopathogènes, de manière à anticiper un dérapage imminent d'iPathos. En de telles situations à risques, y compris donc dès que NNI > 1,00, il n'aura pas recours à un agent de biocontrôle au sens traditionnel, l'efficacité relative de ceux-ci par rapport à des fongicides plus classiques, le plus souvent de synthèse chimique, étant d'autant plus réduite. Le **microbiologiste** ne recommandera jamais d'augmenter les doses-hectare d'engrais-N, et pour causes. **L'agronome,** lui, ne constatant pas de maladie apparente au moment de l'application de ladite dose-hectare d'engrais-N préconisée ne cherchera pas à inclure dans la bouillie pulvérisable un fongicide - y compris biologique, celui-ci n'étant préconisé qu'une fois une infestation constatée (Olesen et al. 2000, 2003). Enfin, **l'agrobiologiste -** y compris ceux et celles prônant l'utilisation d'éliciteurs (stimulateurs) des défenses naturelles (SDN) de la plante, n'ont jamais recommandé expressément l'apport, et encore moins le surdosage, d'engrais - N ; au mieux il s'agit parfois d'apports des sels de potassium, de phosphore et/ou de certains oligoéléments (Reuveni et al. 1995, 1996 ,1997), mais jamais expressément que d'azote. L'agrobiologiste cherche aussi parfois à lutter contre des nécrotrophes pathogènes à l'aide de saprophytes fongistatiques capables de « nettoyer la plaie » (Kessel et al. 2001) en sorte laisser localement par la réaction HR attribuable à un ou des biotrophes. Cela dit, de tels saprophytes ne sont jamais la raison ou le prétexte pour une augmentation concomitante de l'optimum d'engrais foliaire N.

*Quelques brevets pertinents ?*

WO 2009 156688 A2, US 6,524,577 B1 et US 6,280,719 B1. Par exemple, le caractère inventif de ces souches (US 6,524,577 B1) provient du fait que toute en étant fongicides, elles ne produisent pas les antibiotiques et/ou métabolites habituellement rapportés dans l'état de la technique. Or, ce mode d'action différent était à l'époque (1996-2000) étonnant pour l'homme du métier, et représentait donc une solution nouvelle au problème de résistance acquise aux champignons phytopathogènes systématiquement exposés aux mêmes types d'antibiotiques. Elles furent à l'époque les *premières* souches véritablement fongicides, plutôt que simplement fongistatiques ; elles ne servent pas, cependant, à une quelconque FFT, encore moins azotée (i.e. FFTN).

*Sigles*

BBCH (stades) : schéma centimétrique (00 à 99) des stades de croissance et de développement applicables aux cultures agronomiques, y compris ici les grandes cultures.

CNd : ratio carbone : azote de l'agarose au temps t à dNm = x mm en périphérie du puit central, i.e. point maximal d'expansion radiale des iSapro(N) candidats

**Fertilisation foliaire thérapeutique azotée (FFTN) :** Utilisation ciblé de sels fertilisants à base de sels d'azote et avantageusement dépourvus de phosphore, de potassium et de certains oligoéléments à des fins phytosanitaires, généralement préventives.

**HR** (*hypersensitive reaction*) : Réaction de défense qui confine le pathogène via l'épaissississement des parois (lignification), la production de protéines de défense (protéines PR), la production de composés toxiques et/ou d'espèces actives d'oxygène: eg. $H_2O_2$.

**MSPA :** matières sèches des parties aériennes (kg ou t / ha, ou encore mg / plant ou par pot)

**NNI :** Indice de nutrition azoté (*nitrogen nutrition index*) ; A partir de la courbe de dilution, Gastal et Lemaire 2002, NNI est le rapport entre la teneur en azote aérien à un moment donné ($N_{actuel}$) et la teneur en azote critique ($N_{critique}$) donnée par la courbe pour sa biomasse. La fonction de cette courbe est du type $\%N_{critique} = a \cdot MS^{-b}$ a et b étant des constantes empiriques - relativement stable à travers les espèces C3 ou C4.

**Nf :** Dose d'engrais foliaire préconisée capable d'assurer un NNI = 1,00 et/ou à terme un rendement agronomique relatif maximal. Dans le cadre de la présente invention, Nf varie de 0,25 à 8,00 kg-N/ha.

$\Delta$**Nf :** Surdose d'engrais azotée maintenant loisible en présence d'iSapro(N) applicable à Nf de manière à dépasser NNI $\approx$1,00.

**dNf :** Renforcement azoté de la surdose $\Delta$Nf en présence d'iSapro(N) de manière dépasser NNI = 1,00 au delà (supérieur) à celui obtenue qu'avec $\Delta$Nf.

**PR (protéine ;** *pathogen related protein*) : Protéines exprimées et de façon caractéristique par une plante en réponse à l'attaque d'un pathogène.

**iPathos :** mesure phytopathométrique de l'intensité phytopathologique d'un pathogène *in folio,* notamment ici en réponse à un NNI $\geq$1,00. Concrètement, il s'agit de la différence entre l'occupation superficielle in *folio* d'iSapro(N) et celle du pathogène nécrotrophe opportuniste (NECRON). Puisqu'il s'agit de deux progression (dt) logistiques, cette différence est le plus facilement décrite mathématiquement à l'aide d'une fonction exponentielle de type mPathos = a*exp(bt), les valeurs des coefficients a et b propres aux divers iSapro(N) pouvant servir à les comparer les uns au autres.

**iSapro(N) :** inoculum d'un microorganisme candidat, avantageusement saprophyte permettant de transformer la courbe [iPathos : NNI] témoin soit en droite non - parallèle (transformation linéaire), soit en fonction non - linéaire, logarithmique par exemple. Ces microorganismes sont donc plus ou moins *azotophile* une fois NNI = 1,00 dépassé, les iSapro(N) les moins azotophiles pouvant à la limite être considérés comme des *iSapro.*

**iSapro :** *idem* à iSapro(N), mais ne permettant que de translater la courbe [iPathos : NNI] ; ces microorganismes ne sont donc pas plus ou moins *azotophile* une fois NNI = 1,00 dépassé

**SAPRON :** phénomène de translation avec transformation - linéaire ou non, de la courbe mPathos : NNI en réponse, par exemple ici, à iSapro(N)-3. (i.e. SAPRON → Nf + ΔNf + dNf)

**SAPRO :** phénomène de translation sans transformation de la courbe mPathos : NNI en réponse, par exemple ici, à iSapro(N)-1. *(i.e. SAPRO → Nf + ΔNf)*

**SDN** (stimulateurs des défenses naturelles des plantes).

## DIVULGATION DE L'INVENTION

Problème technique

Le dépassement de NNI = 1,00 est loisible et souhaitable d'un point de vue de la production de biomasse (*i.e.* MSPA) et de rendement agronomique, entraîne néanmoins augmentation du *risque* phytosanitaire. Ce problème technique est lié à l'inefficacité relative des *réactions hypersensitives,* dites HR, à l'égard de certains pathogènes biotrophes en raison de l'opportunisme de certains pathogènes nécrotrophes capables de s'incruster dans ces *nécroses localisées* - HR, nécroses pourtant nécessaires au bon fonctionnement des mécanismes de défense de la plante contre certains pathogènes. Cette contre-performance des HR ainsi parasitées (détournées ; *alias hijacked*) au profit de tels nécrotrophes opportunistes rend la protection simultanée des cultures contre nécro- ET bio-trophes problématique. Pire, l'augmentation du taux de fertilisation azotée, et la baisse concomitante du rapport C/N histologique des feuillages qu'elle provoque rendent les cultures d'autant plus susceptibles aux infestations biotrophiques, et donc accessoirement aux infestations nécrotrophiques pourtant en principe moins favorisées par de telles diminutions des rapports C/N. L'intensification de fertilisation N, notamment par voie foliaire, risque donc de compliquer sérieusement la régie phytosanitaire des cultures.

Le problème technique provient donc de quatre (4) choses ;

(i) le détournement des nécroses localisées par des pathogènes nécrotrophes opportunistes suite à une réaction hypersensible (HR) à un ou des pathogènes biotrophes ;

(ii) la réaction de défense des plantes à l'égards des pathogènes nécrotrophes ce fait au détriment de celle à l'égard des pathogènes biotrophes, compliquant ainsi la régie phytosanitaire ;

(iii) l'optimum pondérale (kg-N / ha) en termes de fertilisation - N foliaire est limité par/pour des raisons phytosanitaire du fait que la l'augmentation excessive de NNI (i.e. NNI > 1,00) du feuillage favorise souvent l'infestation pathogénique du feuillage.

(iv) l'optimum agronomique des engrais - N foliaire est inférieur à leur optimum phytosanitaire.

Comment donc augmenter la fertilisation azotée de manière à dépasse NNI = 1,00, notamment à l'aide d'engrais azotés (N) foliaires, sans augmenter le risque d'infections biotrophiques, voire des infections nécrotrophiques opportunistes capables de *détourner* (Dellera et al. 2011, Hammond-Kosack et Rudd 2008) les mécanismes de défenses contre de tels biotrophes ? En d'autres mots ; comment augmenter la charge azotée des feuilles sans nuire à leur intégrité phytosanitaire ? Ou encore ; comment dépasser NNI = 1,00 sans augmenter le *risque phytosanitaire ?*

Solution technique

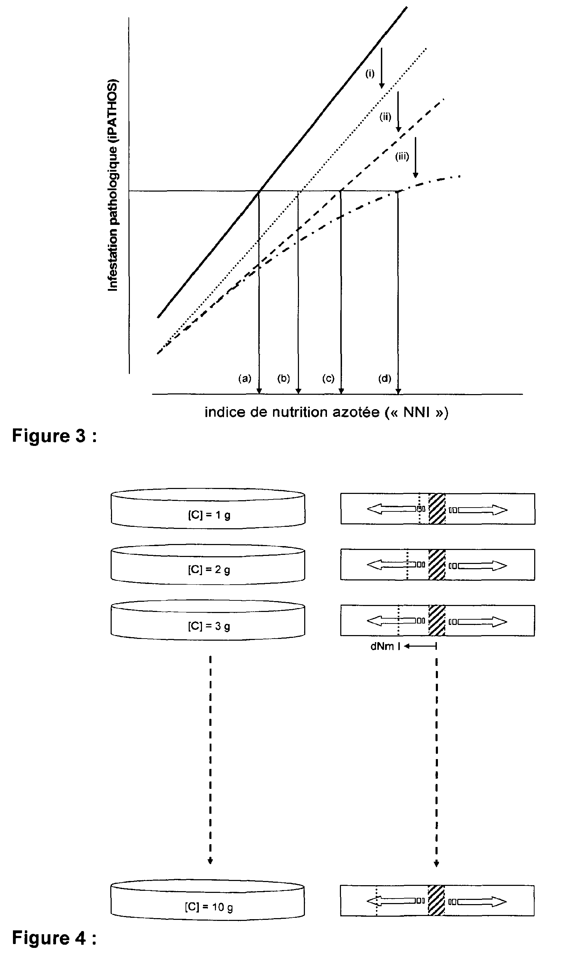

La solution technique modifie, par voie de *fertilisation - foliaire thérapeutique azotée* **(FFTN),** une certaine fonction [iPathos : NNI] témoin, soit simplement par *translatation* **(SAPRO),** soit plus avantageusement par *transformation* **(SARPON)** non parallèle mais linéaire, voire parfois même non linéaire. Ces translations / transformations sont ici effectuées par voie d'inocula microbien saprophyte, **iSarpo,** voir plus avantageusement **iSapro(N).** Dans le cas d'une simple translation parallèle on parlera donc d'un phénomène SAPRO, tandis qu'il s'agira du phénomène SAPRON si la fonction [iPathos : NNI] est transformée et/ou translatée non parallèlement (Figure 3). Par *translation* je veux dire ici que dans un même plan géométrique, le déplacement d'un corps, ou ici d'une courbe d'une fonction quelconque, dont tous les points décrivent des trajectoires égales et parallèles entre elles. Par *transformation* je deux dire que dans un même plan géométrique, le déplacement d'un corps, ou ici d'une courbe d'une fonction quelconque, dont tous les points ne décrivent pas nécessairement des trajectoires égales et parallèles entre elles.

En effet, la simple translation parallèle de la fonction [iPathos : NNI] (SAPRO) n'est pas étonnante en soi, est s'accommode bien de l'état de la technique ; voir en ce sens à la Figure 3, l'augmentation de NNI de (a) à (b). Cela dit, l'existence de fonctions [iPathos : NNI] non parallèles, transformées en présence de **surdoses** d'azote, Δ**Nf** (kg-N / ha), **renforcées** le cas échéant de **dNf,** ne découle pas de l'état de la technique ; il faut expressément rechercher ces souches saprophytiques iSarpo(N), avantageusement actinomycètes et d'origine tellurique, dont l'efficacité fongi- / bactériostatique profitera des substrats carbonées d'autant plus abondant que leur procurera les nécroses localisées issues de HR de plus en plus étendues en fonction dudit surdosage plus ou moins renforcé des apports d'engrais - N foliaire Nf.

Cette inhibition des nécrotrophes opportunistes par iSapro(N) est donc plus marquée si les teneurs en N des feuilles sont plutôt élevées. Or, cela est contre - intuitif puisque de telles teneurs élevées en N ont tendances à rendre les feuilles plus « succulentes » et donc plu vulnérables.

La solution technique proposée peut être réalisée en deux temps ;

1) <u>surdoser</u> Nf (kg-N / ha) en lui ajoutant $\Delta$Nf kg-N / ha provoquant ainsi le dépassement de NNI $\approx$ 1,00, et cela qu'en présence d'iSapro. Cette combinaison iSapro + $\Delta$Nf est contraire aux habitudes et préjugés des hommes du/des métiers que sont les microbiologiste, l'agronome et/ou l'agrobiologiste.

2) <u>renforcer</u> cette surdose d'azote $\Delta$Nf - toujours en présence de iSapro(N), à hauteur de dNf kg-N / ha, lui même fonction d'iPathos dont la progression selon l'augmentation de NNI est atténué en présence d'iSapro(N). Ce renforcement d'$\Delta$Nf par dNf et maintenant doublement contre - intuitif puisque l'augmentation d'iPathos devrait amener l'homme de métier à minorer, plutôt que majorer tel que proposé ici, le taux d'accroissement du taux de fertilisation azotée au delà de celui nécessaire pour atteindre NNI = 1,00.

La solution technique consiste donc simplement à augmenter d'Nf par voie de fertilisation foliaire la dose d'engrais N normalement préconisée pour atteindre NNI = 1.00. En combinant Nf avec iSapro(N), un actinomycète d'origine tellurique par exemple, ni biotrophe, ni nécrotrophe, mais saprophyte et avantageusement réputé comme étant fongistatique et/ou capable d'induire (éliciter) les mécanismes de défenses naturelle de la plante, il est maintenant possible de surdoser Nf à hauteur de $\Delta$Nf, voire de renforcer cette surdose à hauteur de dNf. Cette intensification exprès de la fertilisation N en présence d'iSapro(N) est nouvelle et contraire aux habitudes de l'homme du métiers. Plus précisément, l'invention consiste à préparer une dose-hectare Nf (kg-N / ha) d'engrais foliaire *surdosée* ($\Delta$Nf), voire *renforcée* (dNf) applicable si et quand le diagnostique de l'état nutritionnel azotée de la plante-culture indique que le feuillage contient au minimum la teneur critique en N permettant normalement d'en faire l'impasse, c'est à dire dans le cas d'une fertilisation raisonnée NNI = 1,00.

Cette action d'iSapro(N) plus ou moins azotophiles est particulièrement utile sur des variétés/cultivars de plantes dont la réaction HR est trop for pour être effective en raison du susdit « détournement » des nécroses localisées au profit des nécrotrophes opportunistes. Un tel saprophyte, avantageusement actinomycète, est particulièrement efficace qu'il prévient, notamment via une concurrence nutritionnelle, une incursion de tels nécrotrophes opportunistes sur ou dans lesdites nécroses localisées, d'autant plus présentes si NNI dépasse largement 1,00. En effet, en présence de iSapro(N), ces mêmes nécroses localisées serviront de substrats alimentaires à ces saprophytes qui vont de la sorte "couper le vivres" aux nécrotrophes capables d'utiliser ces nécroses comme points d'entrées. Pour faire simple, disons que ;

- **avec iSapro peu/pas azotophile :**     $\rightarrow$ **iSapro**    **+ Nf + $\Delta$Nf**     $\rightarrow$ **SAPRO**

- **avec iSapro(N) plus azotophile :**     $\rightarrow$ **iSapro(N) + Nf + $\Delta$Nf + dNf**   $\rightarrow$ **SAPRON**

Concrètement, il s'agit donc d'une *fertilisation-foliaire thérapeutique azotée* (FFTN) comprenant *l'application* une dose d'engrais azoté, Nf, comprise entre 0,25 et 8,0 kg-N/ha et une surdose d'azote, $\Delta$Nf kg-N / ha, plus ou moins renforcée à hauteur de dNf kg-N / ha permettant ainsi de dépasser un *indice de nutrition azotée* (NNI) égale à 1,00 transitoirement optimal en termes de production de biomasse et/ou de rendements de cultures agronomiques et/ou fourragères $C_3$ telles que le blé, le raygras *(Lolium* spp.) et/ou le colza et/ou $C_4$ telles que le maïs et/ou le sorgho caractérisée en ce qu'elle comprend l'utilisation d'inocula d'un ou de microorganismes saprophytes **iSapro.** Dans un premier temps, la réduction de l'intensité et/ou l'incidence de la *charge infective,* dite ici iPathos, attribuable à iSapro est décrite par une fonction [iPathos : NNI] *translatée* par rapport à une fonction témoin en absence d'iSapro. En ce sens, le coefficient (b) de ladite fonction [iPathos : NNI] ayant la forme [iPathos = (b) x NNI - (a)] est inchangé, et le coefficient (a) ne représente qu'un pourcentage (%) de celui de ladite fonction témoin établie en absence d'iSapro au sens où les fonctions translatées et témoin ont tous deux la forme [iPathos = (b) x NNI - (a)]. Plus précisément, le coefficient (a) représente entre 25 et 99%, plus particulièrement entre 50 et 95%, et avantageusement entre de 75 à 95% de celui de ladite fonction témoin établie en absence d'iSapro au sens où les fonctions translatée et transformée et témoin ont la forme [iPathos = (b) x NNI - (a)]. Du coup, la surdose $\Delta$Nf représente entre 4 et 22%, plus particulièrement entre 4 et 12%, voire avantageusement entre 4 et 7% de Nf.

Dans la même veine, cette *fertilisation-foliaire thérapeutique* azotée (FFTN) peut aussi comprendre, en sus de la surdose d'azote, $\Delta$Nf kg-N / ha, cette fois-ci renforcée à hauteur de dNf kg-N / ha permettant de dépasser d'autant plus facilement NNI = 1,00, l'utilisation d'inocula d'un ou de microorganismes saprophytes iSapro(N). Or dans ce cas, la réduction d'iPathos attribuable à **iSapro(N)** est décrite par une fonction *translatée et transformée* par rapport à une fonction témoin en absence d'iSapro(N), les coefficients (a) et (b) ne représentant qu'un pourcentage (%) de ceux de ladite fonction témoin ayant la forme [iPathos = (b) x NNI - (a)] établie en absence d'un inocula d'un ou de microorganismes iSapro(N), les fonctions translatées, transformées et témoins ayant tous la forme [iPathos = (b) x NNI - (a)]. Plus précisément encore une fois, le coefficient (a) en présence d'iSapro(N) représente ici entre 25 et 99%, plus particulièrement entre 50 et 95%, et avantageusement entre de 75 à 95% de celui de ladite fonction témoin, tandis que le coefficient (b) représente de 25 à 99%, plus particulièrement de 33 à 90%, voire plus avantageusement de 50 à 85% de, ceux de la fonction témoin établie. Du coup, la surdose ΔNf kg-N / ha représente entre 4 et 22%, plus particulièrement entre 4 et 12%, voire avantageusement entre 4 et 7% de Nf, et dNf entre 4 et 85%, plus particulièrement entre 4 et 25%, voire avantageusement entre 4 et 5% de Nf.

Un troisième cas de figure est proposé pour cette *fertilisation-foliaire thérapeutique azotée* (FFTN) comprenant cette fois et en sus de la surdose d'azote, ΔNf, renforcée d'un certain nombre d'unités d'azote, dNf, proportionnellement et en fonction d'iPathos, de manière à ce que dNf permet de dépasser NNI = 1,00, l'application d'inocula d'un ou de microorganismes saprophytes iSapro(N) caractérisée en ce que le coefficient (b) de la fonction [iPathos : NNI] avec iSapro(N) ainsi *translatée* et *transformée* par rapport à une fonction témoin en absence d'iSapro(N) ne représente qu'un pourcentage (%) de celui de ladite fonction témoin en absence d'iSapro(N) ; la fonction translatée et transformée est non linéaire, voire de la forme [iPathos = (b) x Log(NNI)] - (a), tandis que la fonction témoin est linéaire de la forme [iPathos = (b) x NNI - (a)]. Plus précisément dans ce cas, le coefficient (a) en présence d'iSapro(N) représente entre 25 et 99%, plus particulièrement entre 50 et 95%, et avantageusement entre de 75 à 95%, tandis que le coefficient (b) représente entre 10 et 100%, plus particulièrement entre 33 et 99% et avantageusement ici entre 50 et 90% de celui de la fonction témoin en absence d'iSapro(N). Du coup, la surdose ΔNf représente entre 4 et 22%, plus particulièrement entre 4 et 12%, voire avantageusement entre 4 et 7% de Nf, et dNf entre 4 et 90%, plus particulièrement entre 4 et 25%, voire avantageusement entre 4 et 5% de Nf.

Enfin, précisons que cette *fertilisation-foliaire thérapeutique azotée* (FFTN) est caractérisée en ce que iPathos est le fait d'un ou de microorganismes nécrotrophes appartenant à un groupe comprenant entre autres *Botrytis cinerea* et/ou *Sclerotinia sclerotiorum* et/ou *Mycosphaerella gramicola (Septoria tritici)* sur céréales, *Phomopsis* et/ou *Ascochyta* sur Fabaceae grainières, voire aussi *Stagonospora nodorum* et *Pyrenophora tritici-repentis* sur céréales.

Il est aussi question d'un procédé d'obtention de microorganismes *azotophiles,* iSapro(N), comprenant dans une substrat matriciel microporeux faisant ici office de milieu de culture *in vitro* un certain nombre de concentrations de substrats carbonés (C) et azotés (N) assimilables par lesdits microorganismes, des substrats C et/ou N dont l'une est *a priori* constante à travers le substrat matriciel inerte, tel que l'agar gélosé (1%) par exemple, et l'autre diffuse graduellement établissant ainsi un gradient de ratios C/N à travers une certaine distance latérale sur laquelle pourra s'épandre radialement la biomasse iSapro(N) jusqu'à ce que cette expansion soit stoppée à un point, dNm, ou l'un ou l'autre des susdits substrats C et/ou N deviennent limitatifs, caractérisée en ce que ;

● le substrat matriciel gélosée microporeux permet la diffusion de l'un ou l'autre des substrats C et/ou N selon un coefficient de diffusion, De (eg. cm$^2$/sec), établis empiriquement, et cela à partir d'un puit centrale, avantageusement au centre d'un contenant approprié comprenant ledit milieu de culture, une boîte de Petri contenant ledit substrat matriciel par exemple ;
● le microorganisme candidat, iSapro(N), est inoculé immédiatement alentour du dit puit central, sa croissance expansive pouvant donc ce faire radialement à partir de ce point ;
● le point d'expansion radiale de cette croissance d'iSapro(N), dNm (eg. cm ou mm), est relevé à un moment donné, voire avantageusement dans le cas de beaucoup d'actinomycètes et de champignons après 48 heures environ d'incubation ;
● le ratio C/N à ce point dNm, CNd, est établi par mesure, voire plus avantageusement et simplement par calcul, de la concentration du nutriment diffusant graduellement à travers le substrat matriciel, généralement l'azote minéral [Nm], et comparaison rationnelle de celle-ci avec la concentration de l'autre nutriment, généralement du carbone organique catabolisable par iSapro(N).

Les microorganismes concernée ici sont surtout saprophytes non pathogènes, et antagonistes de microorganismes nécrotrophes phytopathogènes appartenant à un groupe comprenant entre autres *Botrytis cinerea* et/ou *Sclerotinia sclerotiorum* et/ou *Mycosphaerella gramicola (Septoria tritici*) sur céréales, *Phomopsis* et/ou *Ascochyta* sur Fabaceae grainières, voire aussi *Stagonospora nodorum* et *Pyrenophora tritici-repentis* sur céréales.

Le nombre de concentration fixes de substrats pour autant de contenants aménageant chacun un desdits puits centraux, carbonés généralement, est compris entre 3 et 100, plus particulièrement entre 5 et 25, voire avantageusement entre 10 et 12, soit suffisamment pour générer autant de points variables nécessaires au traçage des courbes de croissance propres à chaque iSapro(N). Les expansions radiales des microorganismes candidats iSapro(N) doivent décrire des courbes de croissance ayant des valeurs asymptotiques indiquant l'expansion radiale, dNm, maximale, ainsi qu'un éventuel *point d'infléchissement* (Pif) plus ou moins reculé, *i.e.* à gauche du graphe de ladite courbe vers les CNd les plus faibles, propre à chaque iSapro(N), l'iSapro(N) au Pif ainsi le plus reculé étant retenu comme le plus azotophile au sens de la présente invention. Cette croissance d'iSapro(N) est décrite mathématiquement par une courbe de croissance logistique [dNm : CNd] décrivant l'expansion radiale de la biomasse aérienne du microorganisme à cette distance dNm du puits central de type ;

$$dNm = [\, K \,/\, (1 + Ce^{-rCNd}) \,]$$

- ● dNm : rayon (eg. cm) d'expansion latérale sur un gel d'agar (1%) du microorganisme
- ● K : asymptote supérieur (cm)
- ● C : coefficient empirique (1 / CNd)
- ● CNd : ratio C/N à dNm (cm) du gel agar (1 %) = x

Le Pif de la courbe de croissance logistique est défini comme le point où la courbure négative de la courbe, *i.e.* concavité, est la plus importante, calculé mathématiquement comme la valeur la plus négative de la seconde dérivée, dNm", de ladite courbe logistique à ce point.

*Avantages apportés*

L'invention permet d'intensifier la fertilisation foliaire azotée sans augmenter le risque phytosanitaire. Cette augmentation est généralement le fait de telles feuilles maintenant plus « succulentes ». Mieux, les défenses HR en réponse à des pathogène biotrophie ayant souvent été parasitées par des pathogènes nécrotrophes opportunistes peuvent maintenant fonctionner plus efficacement puisque les saprophytes apportés avec Nf peuvent d'autant plus nettoyer de telles nécroses localisées réduisant le risques de telles infections opportunistes.

## DESCRIPTION DES DESSINS ET FIGURES

**Figure 1 :**  Dépassement de *l'indice de nutrition azotée* (NNI) = 1,00 de manière à ce que les degrés de réalisation, ou d'intensité, des puits, eg. IF (indice foliaire, *alias leaf area index* - LAI) et/ou NGR (nombre de grain par épi), et ceux des sources, eg. capacité photosynthétique (PS), soient maximaux et/ou comparables une fois NNI ≈ 1,00 largement dépassé. La zone hachurée représente le potentiel d'amélioration de l'état nutritionnel azoté de la plante en raison d'un éventuel surdosage de la fertilisation N foliaire. Figure adaptée de Gastal et Lemaire 2002.

**Figure 2 :**  Augmentation du ratio N/C du feuillage provoquant une augmentation d'iPathos. S'il était possible d'atténuer la courbe de cette fonction, il serait possible d'augmenter d'autant plus ce ratio N/C (dA) sans provoquer une augmentation concomitante d'iPathos (dB).

**Figure 3 :**  Amélioration schématique de l'état nutritionnelle de la plante (culture) en raison de l'application d'iSapro (N). Quatre (4) cas de figure ; (i) courbe [iPathos : NNI] témoin sans iSapro(N) affichant un iPathos critique à ne pas dépasser par rapport à un NNI (a) jugé optimal à ce stade ; (ii), une simple *translation* (parallèle) de cette courbe témoin attribuable à iSapro permettant de dépasser à l'aide d'une simple surdose, ΔNf, NNI de (a) jusqu'à (b) ; (iii), une *translation* non - parallèle mais toujours linéaire attribuable d'iSapro(N) permettant de dépasser NNI de (b) jusqu'à (c) ; (iv), une transformation de la relation [iPathos : NNI] témoin permettant de renforcer la surdose ΔNf foliaire à hauteur de dNf permettant l'augmentation d'NNI de (c) jusqu'à (d).

**Figure 4 :**  Mode d'obtention des agents Sapro(N). Un puit central (hachuré) aménager au centre d'un contenant, tel qu'une boîte de Petri par exemple (cf. perspectives obliques et frontales), contenant de l'agarose (eg. agar 1%) avec une solution d'azote minéral (Nm) tel que l'azote nitrique ($NO_3$), cet Nm pouvant ainsi diffuser et créer un gradient de concentrations (flèches guirlandées). Un nombre de contenants / boîtes dont l'agar est progressivement enrichi d'un substrat carboné (C) établira à son tour un gradient de concentration, ici et par exemple de 1 à 10 g-Cglucose / L. Un organisme saprophyte candidat, iSapro (N), inoculé en périphérie du puit central migrera à une distance dNm selon son affinité pour N en fonction de la concentration en substrat C, [C]. dNm est donc le rayon du diamètre de l'expansion de la biomasse d'iSapro(N). dNm représentera l'extension d'iSapro(N) à un moment donnée, ici et par exemple après 48 h d'incubation, et donc accessoirement sa capacité à nettoyer la plaie étant donné une certain concentration d'Nm [Nm] minimale critique fonction de [C]. [C] est assimilable conceptuellement à la taille de la nécrose localisée - HR (*cf.* texte), et donc aussi iPathos.

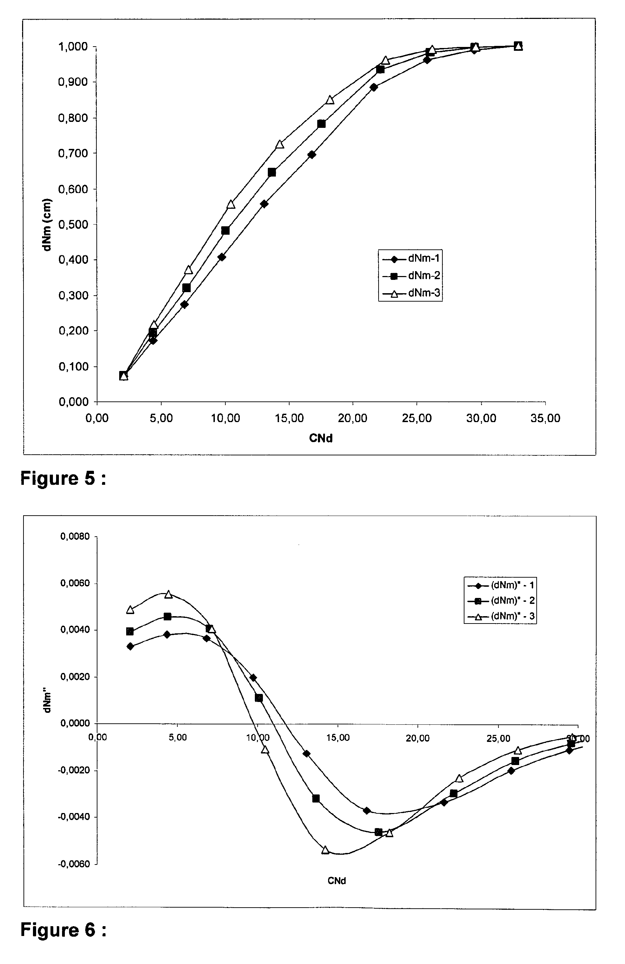

**Figure 5 :** Courbes des cinétiques de croissance (logistiques) permettant d'atteindre dNm pour trois (3) microorganismes saprophytes candidats, iSarpo(N) - 1, 2 et 3. Une fois dNm atteint, le ratio CNd à ce point est soit calculé en fonction de la porosité de l'agarose et du coefficient de diffusion (De) de Nm, soit mesuré directement par prélèvement. Ces points variables (dNm : CNd), une dizaine par exemple ici, pour autant de boîte de Petri contenant initialement de 1 à 10 g de substrat $C_{glucose}$ (Tableau 1), serviront à établir les courbes logistiques $dNm = [K / (1 + Ce^{-rx})]$ pour chacun des trois iSapro(N). Les cinétiques de croissance permettent d'atteindre des asymptotes, K, de dNm de 0,5 à 1,0 (ici) cm sont ainsi décrites via les coefficients K, C et r (*cf.* Tableau 2.)

**Figure 6 :** Graphes des secondes dérivées (dNm") des courbes de croissance logistiques à la Figure précédente (Figure 5). Le point d'infléchissement (Pif) des courbe de croissance pour chacun des trois (3) iSapro(N) ayant atteint des valeurs de K (dNm) asymptotiques de 0,5 et, ici, 1,0 cm d'expansion radiale à partir du puit central sont repérables par les minima dNm", où la courbure concave de la courbe logistique (Figure 5) est la plus importante ; c'est à ce point, plus ou moins reculé par rapport à (CNd : dNm) que l'augmentation du rapport N/C commence à nuire appréciablement à la progression d'iSapro(N).

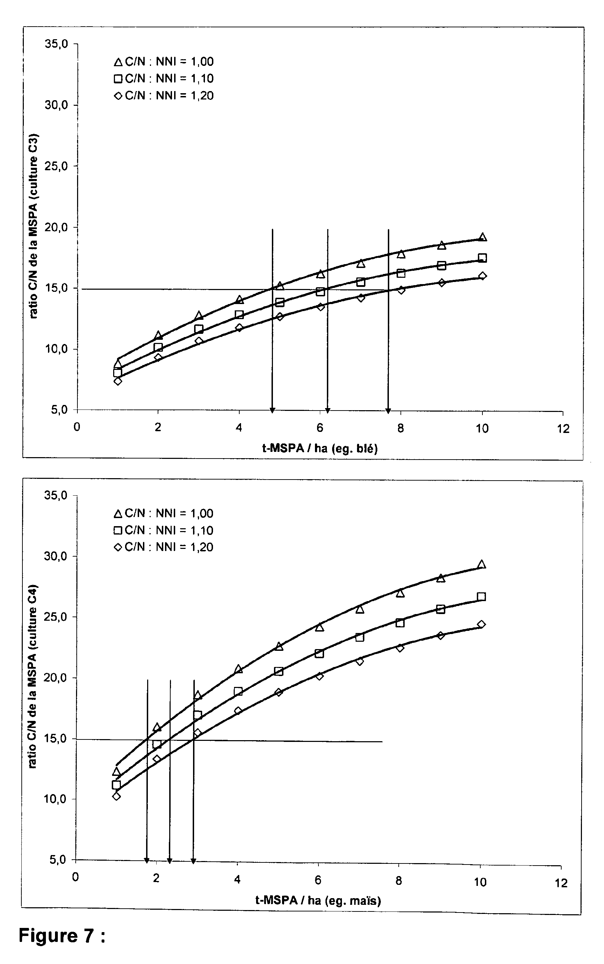

**Figure 7 :** Cinétique d'augmentation du ratio C/N des *matières* sèches *des parties aériennes* (MSPA) de cultures agronomiques en fonction de l'augmentation de la MSPA (tonnes / ha). Trois (3) NNI sont ici considérés ; 1,00, 1,10 et 1,20. Les traits fléchés indiquent un C/N de 15 cohérent avec ceux observés aux dNm" minima (*cf.* Pif ; Figure 6) les trois iSapro(N). A mesure qu'augmente NNI, la MSPA à laquelle C/N ≈ 15 augmente elle aussi et permet ainsi d'élargir la fenêtre d'application de la FFTN Ici, deux (2) cas de figures ; cultures C3 (*eg.* blé ; haut), et C4 (*eg.* maïs ; bas).

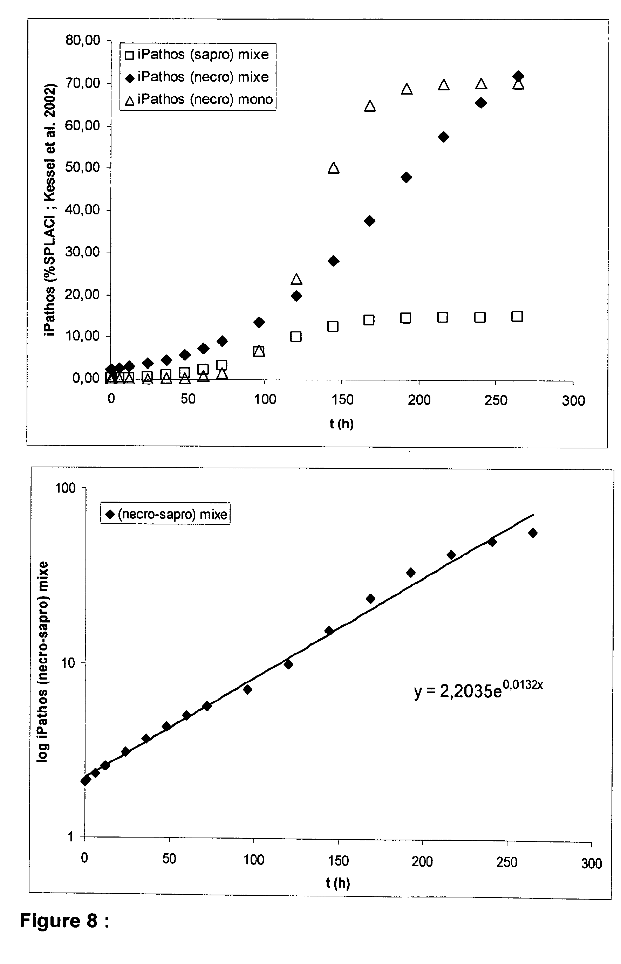

**Figure 8 :** (haut) - Courbe de la cinétique de l'infestation des tissus nécrosés d'un feuillage (iPathos) par un microorganisme saprophyte, **sarpo**, (*eg. Ulocladium atrum),* et nécrotrophe opportuniste, **necro,** (*eg. Botrytis cinerea),* soit seul en monoculture (mono), soit ensemble (mixe). En présence de **sapro,** la progression de **necro** est d'autant plus atténuée que celle de de sapro est dynamique. iPathos est ici une mesure de SPLACI (*i.e. Sporulation LeafArea Corrected for Intensity ;* Kessel *et al.* 2002). (bas) - Cinétique de la progression de l'écart entre l'infestation par necro et **sapro** des tissus nécrosés. Graphiquement, il s'agit de l'aire entre courbes **necro** et **sapro** mixes à la figure du haut. La progression exponentielle de cette écart est le plus facilement décrite par le logarithme (log) de cette expansion, iPathos en fonction du temps.

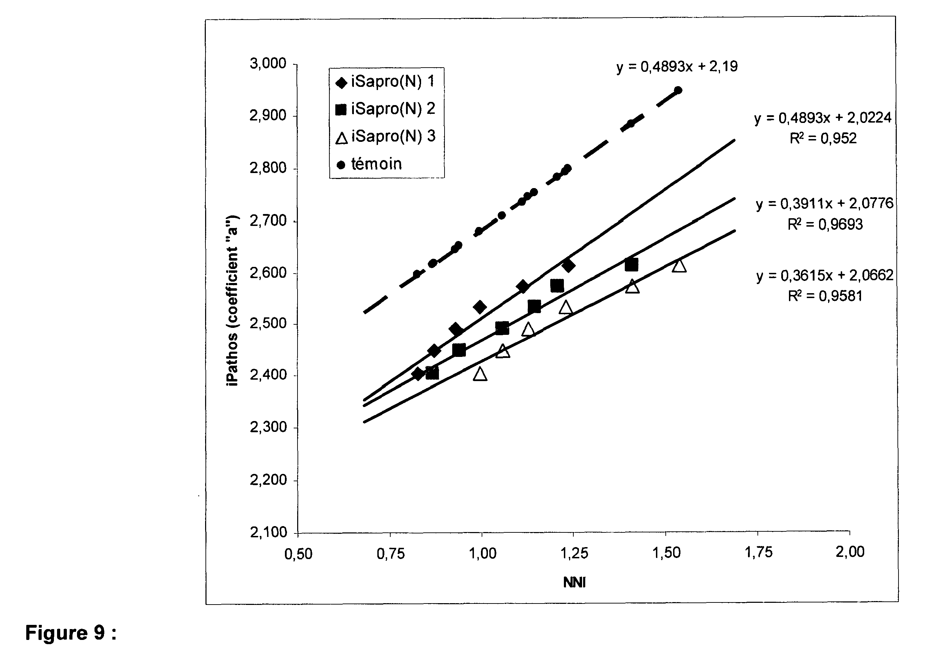

**Figure 9 :** Scénario de progression de iPathos selon celle NNI établie à partir des valeurs de CNd converties en N/C, et donc accessoirement en NNI. iPathos est ici la différence (écart) entre les courbes logistique de progression de l'occupation superficielle des tissues nécrosés par les nécrotrophes opportunistes, ici *Botrytis cinerea* (cf. Figure 8), et les divers iSapro(N) - 1, 2 et 3 plus ou moins *azotophiles.* L'écart progresse exponentiellement, surtout au début de l'incubation, cette progression est avantageusement décrite par une simple relation de type [iPathos = a * exp(bt)], "a" et "b" étant des coefficients comparables et propres à chaque iSapro(N).

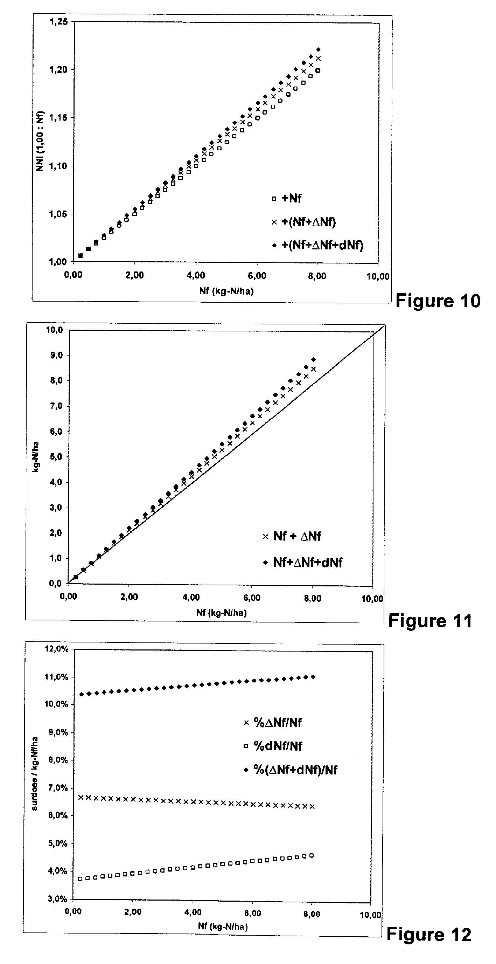

**Figure 10 :** Une fois les données NNI exprimées en iPathos (Figure 9), en présence ou non d'iSapro(N), il est ici possible de repérer les valeurs d'NNI loisibles d'atteindre - i.e. sans augmentation d'iPathos par rapport à NNI ≈ 1,00 qu'avec Nf mais sans iSapro(N), avec surdosage (ΔNf), voire avec son renforcement (dNf) permettant de dépasser d'autant plus NNI = 1,00. Pour plus de transparence, les valeurs composant ce graphique sont rapportées aux Tableaux 5 et 6.

**Figure 11 :** Surdoses ΔNf (kg-N / ha) avec et sans renforcement dNf (kg-N / ha) de celles-ci par rapport à une certaine dose d'engrais foliaire Nf (ligne 1:1) permettant de dépasser NNI = 1,00, et cela sans perturber la régie phytosanitaire et/ou sans augmenter iPathos au delà de celui atteint dès NNI = 1,00 sans iSapro(N) tel que rapportée à la Figure 9. Le phénomène SAPRON peut être ainsi retranscrit en équivalents pondéraux (kg-N / ha) dans le cas d'une FFTN avec iSapro(N), permettant non seulement de sur - doser Nf à hauteur de ΔNf, mais de renforcer cette surdose à hauteur de dNf.

**Figure 12 :** Surdoses, ΔNf, et leurs renforcement, dNf, en pourcentage (%) de Nf en fonction de la progression de Nf (kg-N / ha). A noter que c'est surtout dNf en % de Nf qui progresse, et non ΔNf qui lui stagne en ce sens. A noter aussi que ces estimées sont plutôt conservateurs (voir texte), soit ici de l'ordre de 10 à 11 % de Nf.

## RÉALISATION DE L'INVENTION

L'invention réduit le risque phytosanitaire une fois NNI = 1,00 dépassé. Elle ne nécessite pas de suivi particulier, hors expérimentation *(infra),* de l'état phytosanitaire de la culture bénéficiant d'une telle FFTN. En principe toutes les pathologies nécrotrophes opportunistes en présence de biotrophes induisant des nécroses localisées de type HR sont concernées. Cette omnipotence est possible en raison d'une simple concurrence nutritionnelle et pas nécessairement une action fongistatique et/ou fongicide plus spécifique. Les nécrotrophes concernés peuvent donc être choisies parmi un groupe comprenant *Botrytis cinerea* et/ou *Sclerotinia sclerotiorum* et/ou *Mycosphaerella gramicola (Septoria tritici ;* hemibiotrophe) sur céréales, *Phomopsis* et/ou Ascochyta sur Fabaceae grainières, voire aussi *Stagonospora nodorum* et *Pyrenophora tritici-repentis* sur céréales, bien que ces pathologies ne soient pas pour le moment très présente en Europe de l'ouest. Il s'agit surtout de traiter les maladies foliaires, mais les pathologies affectant les fleurs et/ou les tiges sont aussi concernées si la pulvérisation des FFTN les atteignent accessoirement, et dans la mesure où elles impliquent une prolifération opportunistes de nécrotrophes à la suite, par exemple, de réactions HR.

### Obtention des iSapro(N)

Les microorganismes candidats, avantageusement saprophytes, sont obtenus a priori de manière conventionnelle ; il sont avantageusement actinomycètes, ce type d'organismes étant très présent dans les sols arables et donc bien adapté à une utilisation agronomique. Plus précisément et à titre d'exemple on peut procédé comme suit. Des échantillons des rhizosphère et des racines, et les souches actinomycètes - des saprophytes, isolées sur un milieu SEA (Soil Extract Agar) par traitement par chaleur- agitation, voire par chimiotactisme. Les échantillons sont mélangés, mis en suspension dans de l'eau distillée stérile (4g pour 36ml) et agités (200 rpm) pendant 30 minutes. Ils sont ensuite traités à 50°C pendant 10 minutes, chaque échantillon étant dilué à 10-7, dispersé (0,1 mL) à la surface d'un milieu tel que SEA, puis incubé à 30°C pendant 21 jours. Le traitement des échantillons peut être précédé d'un prétraitement par chauffage, micro-ondes, pulsions électriques ou à l'aide de réactifs chimiques. Les souches sont transfères sur un milieu Bennett (2 mois, à 4°C, ou dans 20% de glycérol stérile à -20°C). Il faut s'assurer à ce stade que ces iSapro(N) sont non pathogéniques. Leurs effet sur les nécrotrophes opportunistes étant surtout via une concurrence nutritionnelle, leur action fongicide et/ou SDN n'est pas strictement requise bien que loisible, voire souhaitable.

Ces microorganismes sont par la suite inoculés sur un milieu Bennett. Après 5 jours d'incubation à 30°C, un cylindre de 6 mm de diamètre est découpé dans le milieu de culture et placé sur un milieu test avec certains pathogènes (milieu PDA pour les champignons et Bennett pour les bactéries) 4°C pendant 4 heures, puis incubées à 30°C (diamètres d'inhibition sont déterminés après 48 heures) dont les *Micrococcus luteus, Bacillus substillus,* et *Streptomyces scabies,* et des champignons phytopathogènes comme *Fusarium culmurum, Botrytis cineria, Phythium ultimum,* ainsi qu'avantageusement les champignons causant les maladies du bois de la vigne comme *Phaeomoniella chlamydospora, Phaeomoniella aleophilum, Etypa lata, Fomitiporia mediterranea* et *Botryosphaeria obtusa.* Les iSapro(N) peuvent aussi abriter des gènes de défense naturelle des plantes tels que pour les phytoalexines, les protéines PR *(pathogen related)* et de composés renforçant les parois des cellules.

### Évaluation de l'azotophilie des iSapro(N)

Une fois de tels microorganismes candidats obtenus, il faut en évaluer *l'azotophilie* leur permettant de réaliser le phénomène SAPRON au sens de la présente invention. Par *azotophilie* je veux dire ici la propension qu'ont iSapro (N) à s'étendre radialement (dNm) malgré une réduction de CNd. En ce sens, elles résistent en terme de dNm le plus à une baisse de CNd. Selon les courbes dNm : CNd à la Figure 5, les candidates iSapro(N) 2 et 3 sont donc plus azotophiles qu'iSapro(N) 1. Faut-il encore que les souches les NNI correspondants au iSapro(N) les plus azotophiles soit réalisables physiologiquement.

Pour établir *in vitro* ces courbe dNm : CNd, des boîtes de Petri comportant en leurs centres des puits dans lesquels une solution d'azote minéral, avantageusement de 0,5 g-N/L, est déposée. Celle-ci diffusera à travers l'agarose établissant ainsi un gradient dN/dm vers la périphérie de la boîte (Figure 4). La croissance de biomasses iSapro candidates, avantageusement actinomycètes, inoculé au tour dudit puit s'entendra circulairement jusqu'a un point, dNm, là où le rapport C/N croissant en raison d'une dégradation des teneurs en Nm selon dm devient limitant. Ce point dNm pourra ainsi êtres plus ou moins éloigné dudit puit central selon la teneur initiale en substrat carboné de l'agarose. Une gamme de telles boîtes de Petri avec diverses teneur en substrat - C, un simple ose par exemple, permettra d'établir une gamme de rapport C/N limitatif, dit CNd.

Le graphe dNm : CNd de ces n - point variables, avantageusement n = 6 à 10, voire plus selon les moyens disponibles, permettra d'établir le ratio CNd auquel croit le plus effectivement iSapro ; en principe ce ratio CNd devra être conpris entre le rapport C/N d'une culture à un stade approprié dont le NNI est compris entre 1,00 et approximativement 1,40, soit ici de l'ordre de 12 à 15 *(infra).*

Il faut dans un premier temps déterminer le gradient de Nm à travers le gel agar, disons 1% (nb. La concentration du gel agar de 0,5 à 4,0% ne semble pas avoir effet marqué sur le coefficient de diffusion du nitrate (Stiles et Adair 1921). Pour de faire j'utilise ici l'équation de Fang et al. 2008 ;

$$C_{(x,t)} = C_o \, [erfc(x \, / \, racine(4tDe))]$$

- x : distance latérale (cm), ici à travers un gel d'agar 1%
- t : durée (sec) de la diffusion du soluté à sur x (cm)
- C : concentration du soluté à x (cm) après t (sec), soit ici [Nm / NO$_3$] sur 48 heures.
- Co : *idem* à C, mais à t = 0 secondes
- De : coefficient de diffusion effective du soluté, ici le NO$_3$ (14,6 x 10$^{-6}$ (cm$^2$ / sec)
- erfc : fonction d'erreur gaussienne *(Gauss error fonction)*

C'est ce gradient que servira à calculer [Nm] aux diverses distances d'expansion radiales, dNm, des iSapro(N) candidates (Tableau 1) ;

Tableau 1 : Données pour la construction des courbes logistiques de croissance (expansion latérale) des iSapro(N) candidats 1 à 3 sur les gels d'agar en fonction du gradient d'azote minéral, [Nm], sur x cm (Figure 5) et de la concentration initiale en substrat carboné du gel (C ; de 1 à 10 g-C$_{glucose}$ / L). Il s'agit ici des iSapro(N) ayant comme valeurs de K, *i.e.* asymptotes supérieures (dNm) 1,00 (Figure 5). Pour fin de modélisation il est nécessaire de faire varier cette valeur de K de 0,5 à 1,0 (cf. Tableau X) en modifiant la teneur initiale d'Nm (NO$_3$) dans le puit central de boîte la boîte de Petri (Figure x).

| iSapro(N) | [C] | dNm | [Nm], si De 14,6x10$^{-6}$ | CNd |
|---|---|---|---|---|
| 1 | 1 | 0,071 | 0,4838 | 2,07 |
| 1 | 2 | 0,172 | 0,4614 | 4,33 |
| 1 | 3 | 0,274 | 0,4394 | 6,83 |
| 1 | 4 | 0,408 | 0,4118 | 9,71 |
| 1 | 5 | 0,557 | 0,3825 | 13,07 |
| 1 | 6 | 0,696 | 0,3564 | 16,83 |
| 1 | 7 | 0,884 | 0,3231 | 21,66 |
| 1 | 8 | 0,962 | 0,3099 | 25,81 |
| 1 | 9 | 0,988 | 0,3055 | 29,46 |
| 1 | 10 | 0,999 | 0,3038 | 32,92 |
| 2 | 1 | 0,073 | 0,4834 | 2,07 |
| 2 | 2 | 0,194 | 0,4565 | 4,38 |
| 2 | 3 | 0,321 | 0,4295 | 6,98 |
| 2 | 4 | 0,482 | 0,3971 | 10,07 |
| 2 | 5 | 0,646 | 0,3656 | 13,68 |
| 2 | 6 | 0,782 | 0,3409 | 17,60 |
| 2 | 7 | 0,933 | 0,3148 | 22,24 |
| 2 | 8 | 0,982 | 0,3066 | 26,09 |
| 2 | 9 | 0,995 | 0,3044 | 29,57 |
| 2 | 10 | 1,000 | 0,3036 | 32,93 |
| 3 | 1 | 0,074 | 0,4831 | 2,07 |
| 3 | 2 | 0,219 | 0,4512 | 4,43 |
| 3 | 3 | 0,372 | 0,4191 | 7,16 |
| 3 | 4 | 0,557 | 0,3825 | 10,46 |
| 3 | 5 | 0,727 | 0,3508 | 14,25 |
| 3 | 6 | 0,849 | 0,3291 | 18,23 |
| 3 | 7 | 0,962 | 0,3099 | 22,59 |
| 3 | 8 | 0,991 | 0,3050 | 26,23 |
| 3 | 9 | 0,998 | 0,3039 | 29,61 |
| 3 | 10 | 1,000 | 0,3036 | 32,94 |

Il s'agit maintenant de générer une gamme de concentration initiales de teneurs en substrat carboné, [C] dans le gel agar 1%, disons ici de 1 à 10 g-C / L (Figure 4 ; Tableau 1). Celles-ci sont mises en contacte avec une teneur initiale d'azote minéral (Nm), disons et par exemple 0,50 g-$N_{NO3}$ / L, teneur initiale qui sera elle comme de raison dégradée à mesure que cet azote diffusera à travers l'agar sur une période de temps donnée, disons avantageusement ici, de 48 h. Il faut avantageusement une dizaine (10) de boîtes de Petri (Figure 4) pour chacune des iSapro(N) candidats. Les iSapro(N) les plus capables de valoriser [C] jusqu'à épuisement de Nm seront aussi les plus aptes à se développer sur les *plaies* HR plus ou moins riches en N selon le NNI atteint, réduisant du coup le taux d'accroissement d'iPathos fonction d'NNI.

Des cinétiques de croissance logistiques modèles et exemplaires pour de telles iSapro(N), trois (3) ici, peuvent donc être générées. Dans les faits, il est possible de faire varier, disons de 5 à 10 mm, l'expansion radiale d'iSapro(N) à un moment donnée (eg. 48 h d'incubation) en modifiant la concentration initiale de Nm dans le puit central au sein de l'agar (1 %). Ces différentes valeurs d'expansion radiale à un moment donné généreront autant de cinétiques de croissances.

L'expansion radiale, dNm, à un moment donné des differents iSapro(N) en fonction du rapport C/N (CNd) à cette distance dNm du puits central est elle résumable par une fonction logistique ;

$$dNm = [ K / (1 + Ce^{-rx}) ]$$

- ● dNm : rayon (cm) d'expansion latérale sur un gel d'agar (1 %) du microorganisme saprophyte candidat, iSapro(N)
- ● K : asymptote supérieur (cm)
- ● C : coefficient empirique (1 / CNd)
- ● x : ratio C/N à dNm (cm) du gel agar (1%) fonction du gradient [Nm] / dx (Figure X)
- ● CNd : ratio C/N à dNm (cm) du gel agar (1 %) (cf. x)

Comme nous le verrons, ce type de fonction logistique est aussi applicable au développement superficielle et/ou histologique de microorganismes saprophytes (sapro) et/ou nécrotrophe (nécro) pathogènes sur/en tissus nécrosés *in folio (infra ;* Kessel et al. 1999-2005). Mathématiquement, le *point d'inflexion* ($P_{ix}$), ou la première dérivée dNm', de ce type de fonction logistique, est ;

$$P_{ix} = (ln(C)/r) ; K/2)$$

La deuxième dérivée de cette fonction permettant d'observer sont *point d'infléchissement* ($P_{if}$) lorsque dNm" est minimale (Figure 6) est elle ;

$$P_{if} = dNm'' = [ CKr2e^{rx}(C - e^{rx}) / (C + e^{rx})^3 ]$$

Pour comparer objectivement les saprophytes candidats il faut déterminer soit le *point d'inflexion* (Pix), soit le *point d'infléchissement* (Pif) de la courbe modèle (Tableau 2). Pix est défini mathématiquement par le point de la courbe où K (courbure de la courbe) = 0,00, tandis que Pif par le point de la courbe ou K est maximum. Dans les faits, Pif est plus applicable en agronomie puisque les C/N histologiques (i.e. de la MSPA) sont généralement bien supérieurs à Pix. Puisque CNd soit a *priori* être comparable au C/N histologique lorsque NNI est égale au moins 1,00, Pif nécessairement supérieur à Pix est effectivement plus applicable.

**Tableau 2 :** Valeurs numériques pour les paramètres logistique K, C et r microbiologiques pour les trois (3) iSapro (N) candidates. Ces valeurs sont déterminables empiriquement en observant à un moment donnée, ici 48 heures d'incubation, l'expansion radiale maximale, dNm (cm), selon le procédé proposée à la Figure 4, et en effectuant une régression non linéaire logiques ; six (6) groupes de valeurs asymptotiques, K, sont postulées, soit de 5 à 10 mm. Les valeurs pour les points d'infléchissement, Pif, (dNm" : CNd ; Figure 6) des ces courbes sont aussi indiquées ; elles serviront à repérer NNI.

| ISapro(N) | K (dNm) | C (CNd) | r (11CNd) | Pif (CNd) |
|---|---|---|---|---|
| 1 | 0,504 | 6,279 | 0,258 | 12,30 |
| 2 | 0,500 | 6,500 | 0,296 | 10,80 |
| 3 | 0,497 | 6,879 | 0,337 | 9,90 |

(suite)

| ISapro(N) | K (dNm) | C (CNd) | r (11CNd) | Pif (CNd) |
|---|---|---|---|---|
| 1 | 0,608 | 7,645 | 0,242 | 13,70 |
| 2 | 0,602 | 7,806 | 0,275 | 12,60 |
| 3 | 0,598 | 8,092 | 0,311 | 10,80 |
| 1 | 0,711 | 8,872 | 0,229 | 15,30 |
| 2 | 0,703 | 8,847 | 0,258 | 13,30 |
| 3 | 0,699 | 8,891 | 0,288 | 12,40 |
| 1 | 0,814 | 9,997 | 0,219 | 16,40 |
| 2 | 0,809 | 10,058 | 0,247 | 14,40 |
| 3 | 0,804 | 10,119 | 0,275 | 13,50 |
| 1 | 0,915 | 10,867 | 0,209 | 17,50 |
| 2 | 0,906 | 10,419 | 0,231 | 16,20 |
| 3 | 0,900 | 10,185 | 0,254 | 14,40 |
| 1 | 1,017 | 10,483 | 0,199 | 18,30 |
| 2 | 1,008 | 10,870 | 0,218 | 16,80 |
| 3 | 1,001 | 10,628 | 0,240 | 15,50 |

En résumé, je m'explique. Chacune de ces cinétiques logistiques propres à chacune des iSapro(N) candidates impliquent une croissance logistiques par rapport à CNd. Puisqu'à un moment donnée, ici après 48 heures d'incubation, et donc à une certaine distance d'expansion radiale, dNm, soit ici de 5 à 10 mm, la dégradation des teneurs initiales de Nm fonction de De (Tableau 1) révèle un CNd particulier, il est aussi possible d'exprimer les cinétiques de croissance des iSapro(N) en fonction de CNd (Figure 5). Il faut réaliser les susdites cinétiques logistiques sur 48 heures, par exemple, avec un certain nombre de teneurs en substrat carboné, soit ici de 1 à 10 g-$C_{glucose}$ / L - agar (1 %). On obtient ainsi pour chacune des iSapro(N) une certain nombre, par exemple ici dix (10), de points variables dNm : CNd (Tableau 1, Figure 5). Ces courbes de croissance dNm : CNd ont elles des coefficients logistiques K, C et r propres à chacune des iSapro(N) (Tableau 2). Ce sont ces coefficients qui permettent de modéliser *in folio* au sens de Kessel et.al. 1999-2005 la progression logistique de telles saprophytes candidates en présence de nécrotrophes opportunistes. Pour ce faire, il faut convertir, en sorte, ces coefficients K, C et r par rapport à CNd en coefficients K, C et r par rapport au temps d'incubation *in folio (infra* Tableau 3) ; bien que quelque peu arbitraires, ces conversions *(infra* Tableau 4) sont proportionnelles étant donnée l'analogie entre les rapports C/N des gels agar et ceux des nécroses localisées.

## APPLICATIONS BIOINDUSTRIELLES ET AGRONOMIQUES

Le rapport C/N et le choix d'un stade de croissance BBCH et/ou une MSPA spécifique propice à l'application de FFTN, CNd est transformable en NNI. Il est donc possible de rapporter la cinétique phytopathologique *in folio,* elle aussi logistique (Kessel et al. 1999-2005), à ces NNI correspondant aux Pif ainsi calculés pour les cinétiques de croissance logistique microbiologiques *in vitro.*

### *In situ (in folio)*

Pour confirmer le fonctionnement de l'invention, il suffit de constater la non incidence d'une telle FFTN sur l'intégrité phytosanitaire de la parcelle agronomique. Trois modalités sont nécessaires à cet effet ; (i) un témoin Nf sans surdose, (ii) un traitement avec surdose ΔNf, et (iii) un traitement avec surdose ΔNf renforcée de dNf. Il faut donc assurer une disposition judicieuse des modalité de manière à permettre un traitement statistique de type Anova. Si un nombre suffisant de parcelles agronomiques sont concerné, il n'est pas nécessaire d'inoculer plein champs, l'incidence naturelle des pathologies bio- et nécro-trophes étant suffisante en soi. Plus simplement encore, à titre expérimental, il est avantageux de suivre l'état phytosanitaire d'un nombre de parcelles en prélevant un certain nombre de plants pour mesure phytopathométriques. Ces plants, dont les masses et les teneurs en N sont connues, servent aussi à la détermination de NNI ; il est donc possible de relater iPathos et NNI. Deux modalités, avec et sans iSapro(N) sont ici requises, la variabilité intrinsèque inter-plants de NNI au sein d'une parcelle suffisant à générer un nombre de points variables [iPathos : NNI] de manière à démontrer la transformation - linéaire ou non, de la relation [iPathos : NNI] en présence d'iSapro(N).

**Modélisation in folio *via Kessel et al. 1999, 2001, 2002 et 2005***

Il est possible de démontrer par modélisation que la fonction [iPathos : NNI] n'est plus parallèle à une fonction témoin en ayant recours aux modèles logistiques proposés dans Kessel et al. 1999, 2001, 2002 et 2005. Il faut modéliser l'effet d'un saprophyte non pathogène sur l'expansion superficielle et/ou histologique d'un nécrotrophe se développant sur/dans des tissus nécrosés analogues à ceux d'une nécrose localisée / HR. Les relations logistiques proposées par Kessel et al. 1999 - 2005 décrivent l'interaction *in folio (i.e. Cyclamen persicum)* d'un nécrtrophe opportuniste, *Botrytis cinerea,* et d'un saprophyte fongique, *Ulocladium atrum.* Cela dit, un tel modèle est aussi en principe applicable à d'autres, voire tous, les pathogènes nécrotrophes tels que *Botrytis cinerea* et/ou *Sclerotinia sclerotiorum* et/ou *Mycosphaerella gramicola (Septoria tritici;* hemibiotrophe) sur céréales, *Phomopsis* et/ou *Ascochyta* sur Fabaceae grainières, ou encore *Stagonospora nodorum* et *Pyrenophora tritici-repentis* sur céréales.

*calcul des (NNI : iPathos) à partir des CNd*

Le concept SAPRON ne fonctionnera que si l'application de l'iSapro(N) candidats retenus est réalisée au moment opportun, i.e. quand l'épidémiologie de la pathologie concernée, i.e. celle du nécrotrophe opportuniste et non pas nécessairement celle du pathogène biotrophe responsable des lésions HR, est la plus vulnérable. A titre d'exemple, j'ai ici choisi le stade BBCH coïncidant avec une MSPA d'environ 5 t / hectare pour une culture C3 comme le blé.

Il faut donc évaluer *in folio* la capacité de chacun des iSapro(N) à atténuer la progression d'iPathos fonction de NNI. Encore une fois, pour ce faire, il faut convertir les coefficients K, C et r par rapport à CNd en coefficients K, C et r par rapport au temps d'incubation *in folio* (Tableau 3) ; bien que quelque peu arbitraires, ces conversions (Tableau 4) sont proportionnelles étant donnée l'analogie entre CNd et les ratio C/N des nécroses localisées. Selon les données au Tableau 3, les paramètres au Tableau 4 et les graphes à la Figure 6, Pif correspondent à des CNd variant de 13 à 17. Or, pour une culture C3, telle qu'un blé d'hiver, de tels C/N histologiques si NNI ≈ 1,00 correspondent à des MSPA d'environ 5 t/ha. Si NNI devait augmenter à 1,10, voire 1,20 en raison d'une intensification de la fertilisation azotée telle que permise par la présente invention, la fenêtre d'application en terme de MSPA sera d'autant plus large, soit jusqu'à 7,5 t-MSPA / ha (Figure 7).

**Tableau 3 :** Valeurs paramétriques logistiques K, C et r phytopathologique pour le modèle Kessel *et al.* 2002 (Figure 8 / haut; eg. culture C3 / blé) pour les trois (3) iSapro(N) ; la courbe logistique décrivant la progression du pathogène nécrotrophe est elle constante, seul le dynamisme des iSapro(N) étant ici responsable des diminution des coefficients "a" de l'équation [iPathos : NNI] (Figure 8 / bas). La conversion des Pif (CNd) déterminés graphiquement à partir de courbes telles que celles à la Figure 6 ce fait via le ratio N/C (NC) et les relations Nc : MSPA décrites dans, entre autres, Gastal et Lemaire 2002.

| iSapro(N) | K (iPathos) | C (t) | r (1/t) | Pif : CNd | N/C | NNI (5 t-MSPA : C3-blé) | a - [iPathos : NNI] | b - [iPathos : NNI] |
|---|---|---|---|---|---|---|---|---|
| 1 | 7,5 | 103 | 0,041 | 12,3 | 0,081 | 1,24 | 2,613 | 136 |
| 1 | 9 | 103 | 0,041 | 13,7 | 0,073 | 1,11 | 2,573 | 135 |
| 1 | 10,5 | 103 | 0,041 | 15,3 | 0,065 | 1,00 | 2,532 | 134 |
| 1 | 12 | 103 | 0,041 | 16,4 | 0,061 | 0,93 | 2,490 | 132 |
| 1 | 13,5 | 103 | 0,041 | 17,5 | 0,057 | 0,87 | 2,448 | 131 |
| 1 | 15 | 103 | 0,041 | 18,4 | 0,054 | 0,83 | 2,405 | 130 |
| 2 | 7,5 | 103 | 0,046 | 10,8 | 0,093 | 1,41 | 2,613 | 136 |
| 2 | 9 | 103 | 0,046 | 12,6 | 0,079 | 1,21 | 2,573 | 135 |
| 2 | 10,5 | 103 | 0,046 | 13,3 | 0,075 | 1,15 | 2,532 | 134 |
| 2 | 12 | 103 | 0,046 | 14,4 | 0,069 | 1,06 | 2,490 | 132 |
| 2 | 13,5 | 103 | 0,046 | 16,2 | 0,062 | 0,94 | 2,448 | 131 |
| 2 | 15 | 103 | 0,046 | 17,6 | 0,057 | 0,87 | 2,405 | 130 |
| 3 | 7,5 | 103 | 0,051 | 9,9 | 0,101 | 1,54 | 2,613 | 136 |
| 3 | 9 | 103 | 0,051 | 10,8 | 0,093 | 1,41 | 2,573 | 135 |
| 3 | 10,5 | 103 | 0,051 | 12,4 | 0,081 | 1,23 | 2,532 | 134 |
| 3 | 12 | 103 | 0,051 | 13,5 | 0,074 | 1,13 | 2,490 | 132 |
| 3 | 13,5 | 103 | 0,051 | 14,4 | 0,069 | 1,06 | 2,448 | 131 |
| 3 | 15 | 103 | 0,051 | 15,3 | 0,065 | 1,00 | 2,405 | 130 |

Il est comme de raison simple de rétro - calculer les valeurs de NNI pour une MSPA donnée en ratio C/N à l'aide des équations %Nc = aMSPA$^{-b}$ dont les coefficients empiriques a et b sont proposés dans Gastal et Lemaire 2002, notamment et ici pour les culture C3 (eg. blé) et C4 (eg. maïs) ; la teneur en carbone de la MSPA est elle fixée à 45%.

A noter que la présente invention permet ainsi non seulement d'augmenter l'efficacité relative d'iSapro(N), mais aussi d'élargir la fenêtre d'application et facilitant ainsi son utilisation. A noter que le même type d'inférence peut être fait pour une culture C4 telle que celle du maïs, bien que dans ce cas ladite fenêtre d'application est plus restreinte étant donnée une progression plus rapide des C/N des MSPA, soit bien au delà de 15 dès quelques tonnes de MSPA produites. Plus généralement, il faut adapter le stade d'application de la FFTN à la culture et à la pathologie ciblée ; le chois d'un nécrotrophe tel que *B. cinerea,* proche parent de *S. sclerotiorum,* sur blé avec un application de FFTN à ce stade BBCH en présence de 5 à 7.5 t-MSPA / ha est ici qu'illustratif.

**Tableau 4 :** Valeurs des coefficients logistiques K, C et r pour les courbes de type ***Y = [K / (1 + Ce$^{-rx}$)]*** lors de la croissance *in vitro* sur agar (1 %) des iSapro(N) - 1, 2 et 3, et lors de leurs croissance *in folio* (sapro) en présence d'un quelconque nécrotrophe opportuniste (necro) (Figure 8). Les six itération des ces modélisations permettent de générer les 3 x 6 = 18 points variables [iPathos : NNI] (Figure 9), une fois les valeurs de CNd converties en NNI. A noter que les coefficients KCr pour necro sont constant, impliquant une modélisation conservatrice sans l'action (probable) de molécules antifongiques et/ou SDN.

| | *In vitro* (agar 1%) 1 x = CNd | | | *In folio* (tissu nécrosé) 1 x = t (sapron) | | | *In folio* (tissu nécrosé)-1 x = t (necron) | | |
|---|---|---|---|---|---|---|---|---|---|
| itération | K (mm) | C (CNd) | r (1/CNd) | K (%) | C (t) | r (1/t) | K (%) | C (t) | r (1/t) |
| 1 | 5 | 6 | iSapro(N) - | 7,5 | 103 | iSapro(N) - | 85 | 36 | 0,02 |
| 2 | 6 | 8 | 1/2/3 | 9 | 103 | 1/2/3 | 85 | 36 | 0,02 |
| 3 | 7 | 10 | | 10,5 | 103 | | 85 | 36 | 0,02 |
| 4 | 8 | 12 | 0,200/ | 12 | 103 | 0.041/ | 85 | 36 | 0,02 |
| 5 | 9 | 14 | 0,225/ | 13,5 | 103 | 0,046/ | 85 | 36 | 0,02 |
| 6 | 10 | 16 | 0,250 | 15 | 103 | 0,051 | 85 | 36 | 0,02 |

Il s'agit donc vérifier qu'à ce stade qu'un NNI = 1,00 est associée à un C/N approximativement le même que celui du ($P_{if}$ : CNd) d'iSapro(N), soit ici d'environ 13 à 17 (Figure 6). En effet, le but d'identifier Pif sur la courbe [dNm : CNd] est de s'assurer que celui-ci correspond à un NNI d'au moins 1,00 à un tel stade BBCH opportun en terme de régie phytosanitaire, faut de quoi la supposée azotophilie des iSapro(N) ne sera pas valorisable. Par exemple, pour une culture C3 telle que celle du blé ayant produit quelques 5 t-MSPA au rapport C/N d'environ 15, ce sont surtout les iSapro (N) 1, 2 et 3 qui semblent appropriées. Or, selon la représentation graphique des modélisations à al Figure 9 c'est iSapro (N)-3 qui transforme le plus la relation [iPathos : NNI] témoin ; iSapro(N)-3 sera donc en ce sens le plus apte à permettre un renforcement appréciable de la surdose, ∆NF *(infra).*

La courbe [iPathos : NNI] témoin (Figure 9) est ici très importante puisqu'elle va déterminer l'importance des ∆Nf et dNf (en % de Nf). Puisque c'est la valeur de CNd au Pif de la courbe de croissance *in vitro* des iSapro(N) (Figure 5) qui permet de fixer NNI, il est *a priori* impossible d'établir une courbe mPathos : NNI témoin en absence d'inocula saprophytes. Or, si on modéliser mPathos pour un K (saprophyte) = 0,00, on obtient ici une valeur de 2,808 pour le coefficient a, et de 0,141 pour le coefficient b (cf. graphe à la Figure 8 (bas)). On sait aussi que le NNI maximum physiologiquement atteignable par la plante est d'environ 1,40 ; un NNI plus réalisable médian étant lui d'environ 1,25. Enfin, il est raisonnable, et conservateur, de prétendre que la pente de ladite courbe témoin est au moins égale (Figure 9), voire moyenne, à celle en présence de l'iSapro(N) la moins performante, soit ici iSapro(N) - 1. J'ai donc basé mes calculs des ∆Nf et dNf sur ce scénario, le plus conservateur en sorte, sans préjudices à l'égards de scénarios futures plus performants où les pentes des courbes iSapro(N) sont bien inférieures à celle des courbes témoins, notamment en raison par exemple de molécules antifongiques ou fongistatiques et/ou de l'éliciteurs de défenses naturelles de la plantes.

**Calcul des valeurs ∆Nf et dNf selon les données expérimentales et la taille d'Nf**

L'invention est applicable à une fertilisation raisonnée intégrant une détermination intra - saisonnière de l'état nutritionnelle de la culture, notamment en déterminant si le seuil critique en azote foliaire ($N_{critique}$) est atteint au moment du diagnostique au moyen d'un NNI = 1,00. L'agriculteur pourra ainsi vérifier si une mesure intra - saisonnière tel que le dosage des nitrates des jus de bas de tiges (Jubil™) ou encore la mesure indirecte des teneurs chlorophylliennes (SPAD™$_{502}$) est effectivement optimale. Si ce n'est pas le cas, la fertilisation raisonnée est jugée ineffective, et l'agriculteur pourra en ce cas appliquer - à titre de correctif, Nf telle que préconisée, sans surdosage ou renforcement. Au contraire, si la fertilisation raisonnée est réussie, l'agriculteur pour maintenant chercher à dépasser NNI ≈ 1,00 en surdosant Nf à hauteur de ∆Nf étant donnée la coprésence de iSapro(N). Cette surdose ∆Nf pourra être à son tour renforcée à hauteur de dNf. Ce renforcement à hauteur de dNf est ici rendu possible en raison du fait qu'iSapro(N) permet non seulement de translater vers le bas la fonction [iPathos : NNI], mais de la transformer de manière à augmenter l'efficacité relative des saprophytes microbiens ainsi apportées à la surface des feuilles.

Il faut donc exprimer ∆Nf et dNf pondéralement (kg-N / ha ; Figure 11, Tableau 6), ou encore en proportion (% ; Figure 12) de Nf, et cela sur la base d'une fonction [iPathos : NNI] translatée et/ou transformée au sens de la présente invention. Il est aussi possible de convertir cette dernière fonction plus explicite en [NNI : Nf] (Tableau 5 ; Figure 10), en trois fonctions selon le surdosage (∆Nf) et/ou renforcement de cette surdose (dNf) par rapport aux simples apports de Nf sans inocula saprophytes. Pour fin d'illustration, cette conversion ce fit ici sur la base d'un coefficient, c, de 0,025 unités de NNI par unités (kg-N / ha) de Nf ; dans le cadre de la présente invention, ce coefficient peut effectivement varier de 0, 010 à 0, 050 (*cf.* Tableau 7).

Les valeurs d'Nf sont basées sur les doses - hectare préconisées pour un palette de spécialité commerciale existantes, y comprises celles de la société Agronutrition SAS (France), soit de 0,25 à 8,0 kg-N/ha, et à l'extrême 20 à 30 kg-N / ha dans le cas d'un engrais-N foliaire plus intense tel que alias Phyléas™ (*cf.* Balsamo™, société Via Végétale - http://www.viavegetale.com). Les plages de valeurs proposées au Tableau 7 tiennent compte NNI maximaux, soit d'environs 1,40, considéré comme physiologiquement indépassable *(cf.* Devienne-Barret et al. 2000, Ziadi et al. 2009). Les surdoses ∆Nf et leurs éventuels renforcements, dNf, sont exprimés en proportion (%) de Nf, et non pondéralement. C'est surtout dNf qui est plastique, ce renforcement pouvant représenter de 5 à plus de 90% de Nf selon le type et l'accentuation de la fonction [iPathos : NNI] plus ou moins translatée/transformée par iSapro(N) ; ∆Nf et lui cantonné à une plage de valeurs relativement étroite allant de 4 à 22% de Nf.

**Tableau 5 :** Progression des indices de nutrition azotée (NNI) avec l'augmentation de Nf, surdosée à hauteur de ∆Nf, elle même renforcée à hauteur de d'Nf. iSapro(N) - 1 permet le surdosage de Nf à hauteur de ∆Nf, tandis qu'iSapro(N)-3 permet de renforcer ∆Nf de dNf. Les NNI loisibles sans augmenter risques phytosanitaires sont indiqués. La progression illustrée dans ce tableau est basée sur les fonction [iPathos: NNI] telles que décrites à la Figure 10.

| NNI loisibel en présence d'iSapro(N) | | | |
|---|---|---|---|
| Nf | Nf seul | Nf + ∆Nf | Nf + ∆N f+ dNf |
| 0,25 | 1,01 | 1,01 | 1,01 |
| 0,75 | 1,02 | 1,02 | 1,02 |
| 1,25 | 1,03 | 1,03 | 1,03 |
| 1,75 | 1,04 | 1,05 | 1,05 |
| 2,25 | 1,06 | 1,06 | 1,06 |
| 2,75 | 1,07 | 1,07 | 1,08 |
| 3,25 | 1,08 | 1,09 | 1,09 |
| 3,75 | 1,09 | 1,10 | 1,10 |
| 4,25 | 1,11 | 1,11 | 1,12 |
| 4,75 | 1,12 | 1,13 | 1,13 |
| 5,25 | 1,13 | 1,14 | 1,15 |
| 5,75 | 1,14 | 1,15 | 1,16 |
| 6,25 | 1,16 | 1,17 | 1,17 |
| 6,75 | 1,17 | 1,18 | 1,19 |
| 7,25 | 1,18 | 1,19 | 1,20 |
| 7,75 | 1,19 | 1,21 | 1,22 |
| 8,00 | 1.20 | 1.21 | 1,22 |

Tableau 6 : Progression (kg-N / ha) des surdoses d'engrais-N foliaire (∆Nf) et de leurs éventuels renforcement (dNf) selon la taille de Nf (kg-N / ha) préconisé dès NNI ≈ 1,00. Cette progression de ∆Nf et dNf est basée sur les fonction [iPathos : NNI] telles que décrites à la Figure 11.

| Nf | ∆Nf | Nf + ∆Nf | dNf | Nf+∆Nf+dNf |
|---|---|---|---|---|
| 0,25 | 0,02 | 0,27 | 0,01 | 0,28 |

(suite)

| Nf | ΔNf | Nf + ΔNf | dNf | Nf+ΔNf+dNf |
|---|---|---|---|---|
| 0,75 | 0,05 | 0,80 | 0,03 | 0,83 |
| 1,25 | 0,08 | 1,33 | 0,05 | 1,38 |
| 1,75 | 0,12 | 1,87 | 0,07 | 1,93 |
| 2,25 | 0,15 | 2,40 | 0,09 | 2,49 |
| 2,75 | 0,18 | 2,93 | 0,11 | 3,04 |
| 3,25 | 0,21 | 3,46 | 0,13 | 3,60 |
| 3,75 | 0,25 | 4,00 | 0,16 | 4,15 |
| 4,25 | 0,28 | 4,53 | 0,18 | 4,71 |
| 4,75 | 0,31 | 5,06 | 0,20 | 5,26 |
| 5,25 | 0,34 | 5,59 | 0,23 | 5,82 |
| 5,75 | 0,37 | 6,12 | 0,25 | 6,38 |
| 6,25 | 0,40 | 6,65 | 0,28 | 6,93 |
| 6,75 | 0,44 | 7,19 | 0,30 | 7,49 |
| 7,25 | 0,47 | 7,72 | 0,33 | 8,05 |
| 7,75 | 0,50 | 8,25 | 0,36 | 8,61 |
| 8,00 | 0,51 | 8,51 | 0,37 | 8,89 |

Cette augmentation permet effectivement de renforcer ce type de fertilisation foliaire azotée sans nuire pour autant la régie phytosanitaire de la culture. Cette application concrète de la susdite absence de parallélisme [iPathos : NNI] en présence d'iSapro(N) et nouvelle et étonnante en ce sens que l'homme du métier recherchait plutôt à réduire l'intensité de la fertilisation foliaire azotée, même en présence d'iSapro, une fois l'NNI jugé optimal franchit. Or, cette fertilisation foliaire plus intense, surdosée (*i.e.* ΔNf), et non seulement maintenue, mais renforcée (*i.e.* dNf) en fonction de l'augmentation de NNI. L'invention permettra une régie phytosanitaire dans le cadre d'une fertilisation raisonnée azotée plus intensive.

Cette application agronomique de fonctions [iPathos : NNI] plus ou moins abruptes, translatées et/ou transformées est étonnante. En effet, dans le cadre d'une simple fertilisation raisonnée, il est possible d'utiliser iSapro(N) et réduire iPathos attribuable à un nécrotrophes opportuniste tel que B. *cinerae.* Or, la transformation de la fonction [NNI : iPathos] en présence de iSapro(N) permet d'aller plus loin et d'ajouter ΔNf, voire dNf dans le cas ici d'iSapro(N)-3, à Nf sans augmenter iPathos et/ou, surtout, nuire à la régie phytosanitaire de la culture, iPathos restant relativement inchangé malgré cet augmentation du taux de fertilisation au delà de NNI = 1,00.

***Références***

Adair, GS. 1920. LXXV. The penetration of electrolytes into gels. II: the application of fourier's linear diffusion law. Biochem J. 14(6):762-79.

Argenta, G. P. P.R.F. da Silva et Luis Sangoi. 2004. Leaf relative chlorophyll content as an indicator parameter to predict nitrogen fertilization in maize. Ciência Rural, 34 : 1379-1387

Ash, G.J. et J.F. Brown. 1991. Effect of nitrogen nutrition of the host on the epidemiology of Puecinia striiformis f.sp, tritiei and crop yield in wheat Australasian Plant Pathology Vol. 20 (3) : 108-114

Blackmer, T.M., J.S. Schepers et G.E. Varvel. 1994. Light Reflectance Compared with Other Nitrogen Stress Measurements in Corn Leaves. Agron. J. 86:934-938

Colnenne, C., J. M. Meynard, R. Reau, E. Justes, et A. Merrien. 1998. Détermination of a Critical Nitrogen Dilution Curve for Winter Oilseed Rape . Ann. Bot. 81: 311-317

Dellera, S, KE Hammond-Kosacka, et JJ. Rudd. 2011. The complex interactions between host immunity and non-biotrophic fungal pathogens of wheat leaves. J. Plant Physiol. 168 : 63-71

Devienne-Barret, F., E. Justes, J. M. Machet, et B. Mary. 2000. Integrated Control of Nitrate Uptake by Crop Growth Rate and Soil Nitrate Availability under Field Conditions. Ann. Bot 86: 995-1005

Fang, HHP, M. Zhang, T. Zhang et J. Chen. 2008. Prédictions of nitrate diffusion in sédiment using horizontal attenuated total reflection (HATR) by Fourier transform infrared (FTIR) spectrometry. Water Res. 42 : 903-908.

Gastal, F et G. Lemaire . 2002. N uptake and distribution in crops: an agronomical and ecophysiological perspective. J. Exp. Bot. 53: 789-799

Glazebrook, J. 2005. Contrasting mechanisms of defence against biotrophic and necrotrophic pathogens. Annu. Rev. Phytopathol. 2005. 43:205-27

Govrin, EM et A Levine. 2000. The hypersensitive response facilitates plant infection by the necrotrophic pathogen Botrytis cinerea. Current Biology 10:751-757

Hawkins, J. A., J. E. Sawyer, D. W. Barker et J. P. Lundvall. 2007. Using Relative Chlorophyll Meter Values to Determine Nitrogen Application Rates for Corn. Agron. J. 99:1034-1040

Hammond-Kosack, KE et JJ Rudd. 2008. Plant résistance signalling hijacked by a necrotrophic fungal pathogen. Plant Signaling & Behavior 3 :11

Hoffland, E, ML van Beusichem et MJ Jeger. 1999. Nitrogen availability and susceptibility of tomato leaves to Botrytis cinerae. Plant and Soil 210 : 263-272

Jensen, B. et L. Munk. 1997. Nitrogen-induced changes in colony density and spore production of Erysiphe graminis f.sp. hordei on seedlings of six spring barley cultivars. Plant Pathology (1997)46, 191-202

Jeuffroy, M.H., B. Ney et A. Ourry. 2002. Integrated physiological and agronomic modelling of N capture and use within the plant. J. Exp. Bot. 53(370): 809-823

Johnson, KB, Stockwell VO, McLaughlin RJ, Sugar D, Loper JE et Roberts RG. 1993. Effect of antagonistic bacteria on establishment of honey bee-despersed Erwinia amylovora in pear blossoms and on fire blight control. Phytopathology 83 : 995-1002

Justes, E., B. Mary, J.-M. Meynard, J.-M. Machet, et L. Thelier-Huche . 1994. Détermination of a Critical Nitrogen Dilution Curve for Winter Wheat Crops . Ann Bot 74(4): 397-407

Keon, J, J Antoniw, R Carzaniga, S Deller, JL. Ward, JM. Baker, MH. Beale, K Hammond-Kosack, et JJ Rudd. 2007. Transcriptional Adaptation of Mycosphaerella graminicola to Programmed Cell Death (PCD) of Its Susceptible Wheat Host. MPMI 20: 178-193.

Kessel, Geert J.T., Belia H. DE HAAS, Wopke VAN DER WERF et Jurgen KOHL. 2002. Compétitive substrate colonisation by Botrytis cinerea and Ulocladium atrum in relation to biological control of B. cinerea in cyclamen. Mycol. Res. 106 (6): 716-728

Kessel, G. J. T., Köhl, J., Powell, J. A., Rabbinge, R., and van der Werf, W. 2005. Modeling spatial characteristics in the biological control of fungi at leaf scale: Competitive substrate colonization by Botrytis cinerea and the saprophytic antagonist Ulocladium atrum. Phytopathology 95:439-448.

Kessel, G. J. T., de Haas, B. H., Lombaers-van der Plas, C. H., Meijer, E. M. J., Dewey, F. M., Goudriaan, J., van der Werf, W., and Köhl, J. 1999. Quantification of mycelium of Botrytis spp. and the antagonist Ulocladium atrum in necrotic leaf tissue of cyclamen and lily by fluorescence microscopy and image analysis. Phytopathology 89 : 868-876

Kessel, GJT, BH de Haas, CH Lombaers-van der Plas, JE van den Ende, MG Pennock-Vos, W van der Werf et J Köhl. 2001. Comparative analysis of the role of substrate specificity in biological control of Botrytis elliptica in lily and B. cinerea in cyclamen with Ulocladium atrum. Eur. J. Plant Pathology 107: 273-284

Kliebenstein, DJ et HC Rowe. 2008. Ecological costs of biotrophic versus necrotrophic pathogen resistance, the hypersensitive response and signal transduction. Plant Science 174 : 551-556

Lecompte, F, MA Abro et PC Nicot. 2010. Contrasted responses of Botrytis cinerea isolates developing on tomato plants grown under different nitrogen nutrition regimes. Plant Pathology Doi: 10.1111/j.1365-3059.2010.02320.x Lorang, JM, TA. Sweat et TJ. Wolpert. 2007. Plant disease susceptibility conferred by a "resistance" gene. PNAS 104: 14861-14866

Markwell, J., J.C. Osterman et J. L. Mitchell. 1995. Calibration of the Minolta SPAD-502 leaf chlorophyll meter. Photosynthesis Research 46: 467-472

Neumann, S, ND Paveley, FD Beed et R Sylvester-Bradley. 2004. Nitrogen per unit leaf area affects the upper asymptote of Puccinia striiformis f.sp. tritici epidemics in winter wheat. Plant Pathology 53 725-732

Olesen, J. E., J. V. Mortensen, L. N. Jørgensen et M. N. Andersen. 2000. Irrigation strategy, nitrogen application and fungicide control in winter wheat on a sandy soil. I. Yield, yield components and nitrogen uptake. J. Agricultural Sci. 134 : 1-11

Olesen, J. E., L. N. Jørgensen, J. Petersen et J. V. Mortensen (2003). Effects of rate and timing of nitrogen fertilizer on disease control by fungicides in winter wheat. 1. Grain yield and foliar disease control. The Journal of Agricultural Science, 140, pp 1-13.

Oliver, RP et SVS Ipcho. 2004. Arabidopsis pathology breathes new life into the necrotrophs-vs.-biotrophs classification of fungal pathogens. Mol. Plant Pathol. 5 : 347-352

Pitchay, DL, JM Frantz, JC Locke et GCJ Fernandez. 2007. Impact of applied nitrogen concentration on growth of Elatior begonia and New Guinea impatiens and susceptibility of begionia to Botrytis cinerea. J. Amer. Soc. Hort.Sci. 132 : 193-201

Shaner, G., et R. E. Finney. 1977. The effect of nitrogen fertilization on the expression of slow-mildewing resistance in Knox wheat. Phytopathology 67: 1051-1056.

Reuveni, M., Agapov, V. and Reuveni, R. 1995. Suppression of cucumber powdery mildew (Sphaerotheca fuliginea) by foliar spray of phosphate and potassium salts. Plant Pathology 44:31-39.

Reuveni, M. and Reuveni, R. 1995. Efficacy of foliar sprays of Phosphates in controlling Powdery Mildews in field-grown nectarine, mango trees and grapevines. Crop Protection 14:311-314.

Reuveni, R., Reuveni, M. and Agapov, V. 1996 Foliar sprays of NPK fertilizers induce systemic protection against Puccinia sorghi and Exserohilum turcicum and growth response in maize. Eur. J. Plant Pathol. 102:339-348

Reuveni, M., Agapov, V. and Reuveni, R. 1997. A foliar spray of micronutrient solutions induces local and systemic protection against powdery mildew (Sphaerotheca fuliginea) in cucumber plants. European Journal of Plant Pathology 103:581-588.

Reuveni, R. and Reuveni, M. 1998. Foliar-fertilizers therapy - A concept in Integrated Pest Management. Crop Protection 17:111-118.

Stiles, W, et GS Adair. 1921. LXXV. The penetration of electrolytes into gels. III. The influence of the concentration of the gel on the coefficient of diffusion of sodium chloride. Biochem J. 1921; 15(5): 629-635.

Tavernier, V., S Cadiou, K Pageau, R Laugé, M Reisdorf-Cren, T Langin et C Masclaux-Daubresse. 2007. The plant nitrogen mobilization promoted by Colletotrichum lindemuthianum in Phaseolus leaves depends on fungus pathogenicity. J. Experimental Botany, 58 : 3351-3360

Wilcoxson, R. D. 1980. Effects of fertilizers on slow rusting in wheat. Phytopathology 70:930-932.

Yohalem, DS, K. Paaske, K. Kristensen et J. Larsen. 2007. Single application prophylaxis against gray mold in pot rose and pelargonium with Ulocladium atrum. Biological Control 41 (2007) 94-98

Ziadi, N. M. Brassard, G. Bélanger, A. Claessens, N. Tremblay, A.N. Cambouris, M. C. Nolin et L.E. Étienne Parent. 2008. Chlorophyll Measurements and Nitrogen Nutrition Index for the Evaluation of Corn Nitrogen Status. Agron. J. 100:1264-1273

Ziadi, N., G. Bélanger, F. Gastal, A. Claessens, G. Lemaire et N. Tremblay. 2009. Leaf Nitrogen Concentration as an Indicator of Corn Nitrogen Status. Agron. J. 101:947-957

**Tableau 7 :** Valeurs les plus loisibles dans le cadre de la présente invention pour les variables et/ou coefficients permettant de calculer les surdoses d'engrais N foliaire (ΔNf kg-N / ha) et de leurs éventuels renforcement (dNf kg-N / ha) en fonction des coefficients (a) et (b) propres au diverses courbes [iPathos: NNI] plus ou moins abruptes par rapport aux courbes témoins, et/ou de l'importance du coefficient (c) permettant de reconvertir NNI en unités d'Nf ainsi plus ou moins surdosé et/ou renforcé.

| Variable / Coefficient | Description | Unités | Valeurs minimales | Valeurs Maximales | Commentaires / références |
|---|---|---|---|---|---|
| Nf | engrais Nf | kg-N/ha | 0,25 | 8 à 20 | sur la base spécialités existantes |
| NNI | indice de nutrition azotée | na | 1,00 | 1,40 | Justes et al 1994 |
| a | Intersection : Y | % du témoin | 75 | 95 | |
| b | pente Y = bX+a | % du témoin | 50 | 85 | en % de la fonction linéaire témoin |
| b | pente Y = bLn[X] +a | % du témoin | 50 | 90 | en % de la fonction linéaire témoin |
| c | conversion Nf : NNI | kg-N/ha : NNI | 0,010 | 0,050 | valeurs conservatrices |
| ΔNf | proportion surdose / Nf | % de Nf | 4 | 22 | selon le type de fonction [iPathos : NNI] |
| dNf | renforcement de Nf | % de Nf | 4 | 85 | selon le type de fonction [iPathos : NNI] |
| dNf | renforcement de Nf | % de Nf | 4 | 90 | pour fonction [iPathos : NNI] logarithmique |

**Revendications**

1. *Fertilisation-foliaire thérapeutique azotée* (FFTN) comprenant *l'application* une dose d'engrais azoté, Nf, comprise entre 0,25 et 8,0 kg-N/ha et une surdose d'azote, ∆Nf kg-N / ha, plus ou moins renforcée à hauteur de dNf kg-N / ha permettant ainsi de dépasser un *indice de nutrition azotée* (NNI) égale à 1,00 transitoirement optimal en termes de production de biomasse et/ou de rendements de cultures agronomiques et/ou fourragères C3 telles que le blé, le raygras *(Lolium* spp.) et/ou le colza et/ou C4 telles que le maïs et/ou le sorgho **caractérisée en ce qu'**elle comprend l'utilisation d'inocula d'un ou de microorganismes saprophytes iSapro.

2. *Fertilisation-foliaire thérapeutique azotée* (FFTN) selon la précédente revendication **caractérisée en ce que** la réduction de l'intensité et/ou l'incidence de la *charge infective,* dite ici iPathos, attribuable à iSapro est décrite par une fonction [iPathos : NNI] *translatée* par rapport à une fonction témoin en absence d'iSapro.

3. *Fertilisation-foliaire thérapeutique azotée* (FFTN) selon une quelconque des revendications précédentes **caractérisée en ce que** le coefficient (b) de ladite fonction [iPathos : NNI] ayant la forme [iPathos = (b) x NNI - (a)] est inchangé, et le coefficient (a) ne représente qu'un pourcentage (%) de celui de ladite fonction témoin établie en absence d'iSapro au sens où les fonctions translatées et témoin ont tous deux la forme [iPathos = (b) x NNI - (a)].

4. *Fertilisation-foliaire thérapeutique azotée* (FFTN) selon la revendication précédente **caractérisée en ce que** le coefficient (a) représente entre 25 et 99%, plus particulièrement entre 50 et 95%, et avantageusement entre de 75 à 95% de celui de ladite fonction témoin établie en absence d'iSapro au sens où les fonctions translatée et transformée et témoin ont la forme [iPathos = (b) x NNI - (a)].

5. *Fertilisation-foliaire thérapeutique azotée* (FFTN) selon une quelconque précédentes **caractérisée en ce que** la surdose ∆Nf représente entre 4 et 22%, plus particulièrement entre 4 et 12%, voire avantageusement entre 4 et 7% de Nf

6. *Fertilisation-foliaire thérapeutique azotée* (FFTN) selon les revendications 1 et/ou 2 **caractérisée en ce qu'**elle comprend, en sus de la surdose d'azote, ∆Nf kg-N / ha, renforcée à hauteur de dNf kg-N / ha permettant de dépasser l'NNI égale à 1,00, l'utilisation d'inocula d'un ou de microorganismes saprophytes iSapro(N).

7. *Fertilisation-foliaire thérapeutique azotée* (FFTN) selon la précédente revendication **caractérisée en ce que** la réduction d'iPathos attribuable à iSapro(N) est décrite par une fonction *translatée et transformée* par rapport à une fonction témoin en absence d'iSapro(N)

8. *Fertilisation-foliaire thérapeutique azotée* (FFTN) selon une quelconque des revendications 6 et 7 précédentes **caractérisée en ce que** et les coefficients (a) et (b) ne représentent qu'un pourcentage (%) de ceux de ladite fonction témoin ayant la forme [iPathos = (b) x NNI - (a)] établie en absence d'un inocula d'un ou de microorganismes iSapro(N), les fonctions translatées, transformées et témoins ayant tous la forme [iPathos = (b) x NNI - (a)].

9. *Fertilisation-foliaire thérapeutique azotée* (FFTN) selon la précédente revendication **caractérisée en ce que** le coefficient (a) en présence d'iSapro(N) représente entre 25 et 99%, plus particulièrement entre 50 et 95%, et avantageusement entre de 75 à 95% de celui de ladite fonction témoin, tandis que le coefficient (b) représente de 25 à 99%, plus particulièrement de 33 à 90%, voire plus avantageusement de 50 à 85% de, ceux de la fonction témoin établie.

10. *Fertilisation-foliaire thérapeutique azotée* (FFTN) selon une quelconque des revendications 6 à 9 précédentes **caractérisée en ce que** la surdose ∆Nf kg-N / ha représente entre 4 et 22%, plus particulièrement entre 4 et 12%, voire avantageusement entre 4 et 7% de Nf, et dNf entre 4 et 85%, plus particulièrement entre 4 et 25%, voire avantageusement entre 4 et 5% de Nf.

11. *Fertilisation-foliaire thérapeutique azotée* (FFTN) selon les revendications 6 et/ou 7 comprenant en sus de la surdose d'azote, ∆Nf, renforcée d'un certain nombre d'unités d'azote, dNf, proportionnellement et en fonction d'iPathos, de manière à ce que dNf permet de dépasser NNI = 1,00, l'application d'inocula d'un ou de microorganismes saprophytes *iSapro(N)* **caractérisée en ce que** les coefficients (a) et (b) de la fonction [iPathos : NNI] avec iSapro(N) ainsi *translatée et transformée* par rapport à une fonction témoin en absence d'iSapro(N) ne représentent qu'un pourcentage (%) de celui de ladite fonction témoin en absence d'iSapro(N), et que cette fonction translatée et transformée est non linéaire, voire de la forme [iPathos = (b) x Log(NNI) - (a) ] tandis que la fonction témoin est elle de la forme [iPathos = (b) x NNI - (a)].

**12.** *Fertilisation-foliaire thérapeutique azotée* (FFTN) selon la revendication précédente **caractérisée en ce que** le coefficient (a) en présence d'iSapro(N) représente entre 25 et 99%, plus particulièrement entre 50 et 95%, et avantageusement entre de 75 à 95% de celui de ladite fonction témoin, tandis que le coefficient (b) représente entre 10 et 100%, plus particulièrement entre 33 et 99% et avantageusement ici entre 50 et 90% de celui de la fonction témoin en absence d'iSapro(N).

**13.** *Fertilisation-foliaire thérapeutique azotée* (FFTN) selon une quelconques des revendications 11 et 12 précédentes **caractérisée en ce que** la surdose $\Delta Nf$ représente entre 4 et 22%, plus particulièrement entre 4 et 12%, voire avantageusement entre 4 et 7% de Nf, et dNf entre 4 et 90%, plus particulièrement entre 4 et 25%, voire avantageusement entre 4 et 5% de Nf.

**14.** *Fertilisation-foliaire thérapeutique azotée* (FFTN) selon une quelconque des revendications précédentes **caractérisée en ce que** iPathos est le fait d'un ou de microorganismes nécrotrophes.

**15.** *Fertilisation-foliaire thérapeutique azotée* (FFTN) selon la revendication précédente **caractérisée en ce que** le ou les microorganismes nécrotrophes appartiennent à un groupe comprenant entre autres *Botrytis cinerea* et/ou *Sclerotinia sclerotiorum* et/ou *Mycosphaerella gramicola (Septoria tritici)* sur céréales, *Phomopsis* et/ou *Ascochyta* sur Fabaceae grainières, voire aussi *Stagonospora nodorum* et *Pyrenophora tritici-repentis* sur céréales.

**Figure 1 :**

**Figure 2 :**

**Figure 3 :**

**Figure 4 :**

**Figure 5 :**

**Figure 6 :**

Figure 7 :

**Figure 8 :**

**Figure 9 :**

EP 2 572 581 A1

Figure 10

Figure 11

Figure 12

**EP 2 572 581 A1**

Europäisches
Patentamt

European
Patent Office

Office européen
des brevets

# RAPPORT DE RECHERCHE EUROPEENNE

Numéro de la demande

EP 12 36 6001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | F. LECOMPTE ET AL: "Contrasted responses of Botrytis cinerea isolates developing on tomato plants grown under different nitrogen nutrition regimes", PLANT PATHOLOGY, vol. 59, no. 5, 1 septembre 2010 (2010-09-01), pages 891-899, XP055029951, ISSN: 0032-0862, DOI: 10.1111/j.1365-3059.2010.02320.x * page 891, colonne 2, alinéa 1 - page 892, colonne 1, alinéa 1 * ----- | 1-15 | INV. A01N63/00 C05C11/00 C05G3/02 C05F11/08 A01C21/00 A01P3/00 |
| A,D | V. TAVERNIER ET AL: "The plant nitrogen mobilization promoted by Colletotrichum lindemuthianum in Phaseolus leaves depends on fungus pathogenicity", JOURNAL OF EXPERIMENTAL BOTANY, vol. 58, no. 12, 13 juillet 2007 (2007-07-13), pages 3351-3360, XP055029954, ISSN: 0022-0957, DOI: 10.1093/jxb/erm182 * page 3351, colonne 2, alinéa 2 - page 3352, colonne 1, alinéa 1 * -----<br><br>-/-- | 1-15 | |

| DOMAINES TECHNIQUES RECHERCHES (IPC) |
|---|
| A01N C05C C05G C05F A01C |

Le présent rapport a été établi pour toutes les revendications

| Lieu de la recherche | Date d'achèvement de la recherche | Examinateur |
|---|---|---|
| Munich | 14 janvier 2013 | Molina de Alba, José |

# EP 2 572 581 A1

Europäisches
Patentamt

European
Patent Office

Office européen
des brevets

**RAPPORT DE RECHERCHE EUROPEENNE**

Numéro de la demande

EP 12 36 6001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | D. S. Pitchay ET AL: "Impact of Applied Nitrogen Concentration on Growth of Elatior Begonia and New Guinea Impatiens and Susceptibility of Begonia to Botrytis cinerea", J. AMER. SOC. HORT. SCI., 1 janvier 2007 (2007-01-01), pages 193-201, XP055029956, Extrait de l'Internet: URL:http://journal.ashspublications.org/content/132/2/193.full.pdf#page=1&view=FitH [extrait le 2012-06-14] * page 193, colonne 2, alinéa 3 - page 194, colonne 1, alinéa 1 * ----- | 1-15 | |
| A,D | S. NEUMANN ET AL: "Nitrogen per unit leaf area affects the upper asymptote of Puccinia striiformis f.sp. tritici epidemics in winter wheat", PLANT PATHOLOGY, vol. 53, no. 6, 1 décembre 2004 (2004-12-01), pages 725-732, XP055029958, ISSN: 0032-0862, DOI: 10.1111/j.1365-3059.2004.01107.x * page 725, colonne 2, alinéa 1 * ----- -/-- | 1-15 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 14 janvier 2013 | Molina de Alba, José |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

EPO FORM 1503 03.82 (P04C02)

30

**EP 2 572 581 A1**

Europäisches Patentamt
European Patent Office
Office européen des brevets

## RAPPORT DE RECHERCHE EUROPEENNE

Numéro de la demande

EP 12 36 6001

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | E. Justes et al.: "Determination of a critical nitrogen dilution curve for winter wheat crops", Annals of Botany, vol. 74 1 janvier 1994 (1994-01-01), 1994, pages 397-407, XP055030081, DOI: 10.1006/anbo.1994.1133 Extrait de l'Internet: URL:http://aob.oxfordjournals.org/content/74/4/397.full.pdf+html [extrait le 2012-06-15] * abrégé *  ----- | 1-15 | |
| Y,D | WO 2009/156688 A2 (AGRONUTRITION [FR]; TOULOUSE INST NAT POLYTECH [FR]; LEBRIHI AHMED [FR]) 30 décembre 2009 (2009-12-30) * abrégé * * page 11, ligne 1 - page 12, ligne 1 * * page 18, ligne 9 - page 19, ligne 19 * * page 21, ligne 14 - ligne 23 *  ----- | 1-15 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 14 janvier 2013 | Molina de Alba, José |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 36 6001

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-01-2013

| Document brevet cité au rapport de recherche | Date de publication | Membre(s) de la famille de brevet(s) | Date de publication |
|---|---|---|---|
| WO 2009156688 A2 | 30-12-2009 | EP 2313490 A2 | 27-04-2011 |
| | | FR 2932816 A1 | 25-12-2009 |
| | | US 2011143940 A1 | 16-06-2011 |
| | | WO 2009156688 A2 | 30-12-2009 |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009156688 A2
- US 6524577 B1
- US 6280719 B1

**Littérature non-brevet citée dans la description**

- **ADAIR, GS.** LXXV. The penetration of electrolytes into gels. II: the application of fourier's linear diffusion law. *Biochem J.,* 1920, vol. 14 (6), 762-79
- **ARGENTA, G. P. P.R.F. DA SILVA ; LUIS SANGOI.** Leaf relative chlorophyll content as an indicator parameter to predict nitrogen fertilization in maize. *Ciência Rural,* 2004, vol. 34, 1379-1387
- **ASH, G.J. ; J.F. BROWN.** Effect of nitrogen nutrition of the host on the epidemiology of Puecinia striiformis f.sp, tritiei and crop yield in wheat. *Australasian Plant Pathology,* 1991, vol. 20 (3), 108-114
- **BLACKMER, T.M. ; J.S. SCHEPERS ; G.E. VARVEL.** Light Reflectance Compared with Other Nitrogen Stress Measurements in Corn Leaves. *Agron. J.,* 1994, vol. 86, 934-938
- **COLNENNE, C. ; J. M. MEYNARD ; R. REAU ; E. JUSTES ; A. MERRIEN.** Détermination of a Critical Nitrogen Dilution Curve for Winter Oilseed Rape. *Ann. Bot.,* 1998, vol. 81, 311-317
- **DELLERA, S ; KE HAMMOND-KOSACKA ; JJ. RUDD.** The complex interactions between host immunity and non-biotrophic fungal pathogens of wheat leaves. *J. Plant Physiol.,* 2011, vol. 168, 63-71
- **DEVIENNE-BARRET, F. ; E. JUSTES ; J. M. MACHET ; B. MARY.** Integrated Control of Nitrate Uptake by Crop Growth Rate and Soil Nitrate Availability under Field Conditions. *Ann. Bot,* 2000, vol. 86, 995-1005
- **FANG, HHP ; M. ZHANG ; T. ZHANG ; J. CHEN.** Prédictions of nitrate diffusion in sédiment using horizontal attenuated total reflection (HATR) by Fourier transform infrared (FTIR) spectrometry. *Water Res.,* 2008, vol. 42, 903-908
- **GASTAL, F ; G. LEMAIRE.** N uptake and distribution in crops: an agronomical and ecophysiological perspective. *J. Exp. Bot.,* 2002, vol. 53, 789-799
- **GLAZEBROOK, J.** Contrasting mechanisms of defence against biotrophic and necrotrophic pathogens. *Annu. Rev. Phytopathol.,* 2005, vol. 43, 205-27

- **GOVRIN, EM ; A LEVINE.** The hypersensitive response facilitates plant infection by the necrotrophic pathogen Botrytis cinerea. *Current Biology,* 2000, vol. 10, 751-757
- **HAWKINS, J. A. ; J. E. SAWYER ; D. W. BARKER ; J. P. LUNDVALL.** Using Relative Chlorophyll Meter Values to Determine Nitrogen Application Rates for Corn. *Agron. J.,* 2007, vol. 99, 1034-1040
- **HAMMOND-KOSACK, KE ; JJ RUDD.** Plant résistance signalling hijacked by a necrotrophic fungal pathogen. *Plant Signaling & Behavior,* 2008, vol. 3, 11
- **HOFFLAND, E ; ML VAN BEUSICHEM ; MJ JEGER.** Nitrogen availability and susceptibility of tomato leaves to Botrytis cinerae. *Plant and Soil,* 1999, vol. 210, 263-272
- **JENSEN, B. ; L. MUNK.** Nitrogen-induced changes in colony density and spore production of Erysiphe graminis f.sp. hordei on seedlings of six spring barley cultivars. *Plant Pathology,* 1997, vol. 46, 191-202
- **JEUFFROY, M.H. ; B. NEY ; A. OURRY.** Integrated physiological and agronomic modelling of N capture and use within the plant. *J. Exp. Bot.,* 2002, vol. 53 (370), 809-823
- **JOHNSON, KB ; STOCKWELL VO ; MCLAUGHLIN RJ ; SUGAR D ; LOPER JE ; ROBERTS RG.** Effect of antagonistic bacteria on establishment of honey bee-despersed Erwinia amylovora in pear blossoms and on fire blight control. *Phytopathology,* 1993, vol. 83, 995-1002
- **JUSTES, E. ; B. MARY ; J.-M. MEYNARD ; J.-M. MACHET ; L. THELIER-HUCHE.** Détermination of a Critical Nitrogen Dilution Curve for Winter Wheat Crops. *Ann Bot,* 1994, vol. 74 (4), 397-407
- **KEON, J ; J ANTONIW ; R CARZANIGA ; S DELLER ; JL. WARD ; JM. BAKER ; MH. BEALE ; K HAMMOND-KOSACK ; JJ RUDD.** Transcriptional Adaptation of Mycosphaerella graminicola to Programmed Cell Death (PCD) of Its Susceptible Wheat Host. *MPMI,* 2007, vol. 20, 178-193

- **KESSEL, GEERT J.T. ; BELIA H. DE HAAS ; WOPKE VAN DER WERF ; JURGEN KOHL.** Compétitive substrate colonisation by Botrytis cinerea and Ulocladium atrum in relation to biological control of B. cinerea in cyclamen. *Mycol. Res.,* 2002, vol. 106 (6), 716-728
- **KESSEL, G. J. T. ; KÖHL, J. ; POWELL, J. A. ; RABBINGE, R. ; VAN DER WERF, W.** Modeling spatial characteristics in the biological control of fungi at leaf scale: Competitive substrate colonization by Botrytis cinerea and the saprophytic antagonist Ulocladium atrum. *Phytopathology,* 2005, vol. 95, 439-448
- **KESSEL, G. J. T. ; DE HAAS, B. H. ; LOMBAERS-VAN DER PLAS, C. H. ; MEIJER, E. M. J. ; DEWEY, F. M. ; GOUDRIAAN, J. ; VAN DER WERF, W. ; KÖHL, J.** Quantification of mycelium of Botrytis spp. and the antagonist Ulocladium atrum in necrotic leaf tissue of cyclamen and lily by fluorescence microscopy and image analysis. *Phytopathology,* 1999, vol. 89, 868-876
- **KESSEL, GJT ; BH DE HAAS ; CH LOMBAERS-VAN DER PLAS ; JE VAN DEN ENDE ; MG PENNOCK-VOS ; W VAN DER WERF ; J KÖHL.** Comparative analysis of the role of substrate specificity in biological control of Botrytis elliptica in lily and B. cinerea in cyclamen with Ulocladium atrum. *Eur. J. Plant Pathology,* 2001, vol. 107, 273-284
- **KLIEBENSTEIN, DJ ; HC ROWE.** Ecological costs of biotrophic versus necrotrophic pathogen resistance, the hypersensitive response and signal transduction. *Plant Science,* 2008, vol. 174, 551-556
- **LORANG, JM ; TA. SWEAT ; TJ. WOLPERT.** Plant disease susceptibility conferred by a "resistance" gene. *PNAS,* 2007, vol. 104, 14861-14866
- **MARKWELL, J. ; J.C. OSTERMAN ; J. L. MITCHELL.** Calibration of the Minolta SPAD-502 leaf chlorophyll meter. *Photosynthesis Research,* 1995, vol. 46, 467-472
- **NEUMANN, S ; ND PAVELEY ; FD BEED ; R SYLVESTER-BRADLEY.** Nitrogen per unit leaf area affects the upper asymptote of Puccinia striiformis f.sp. tritici epidemics in winter wheat. *Plant Pathology,* 2004, vol. 53, 725-732
- **OLESEN, J. E. ; J. V. MORTENSEN ; L. N. JØRGENSEN ; M. N. ANDERSEN.** Irrigation strategy, nitrogen application and fungicide control in winter wheat on a sandy soil. I. Yield, yield components and nitrogen uptake. *J. Agricultural Sci.,* 2000, vol. 134, 1-11
- **OLESEN, J. E. ; L. N. JØRGENSEN ; J. PETERSEN ; J. V. MORTENSEN.** Effects of rate and timing of nitrogen fertilizer on disease control by fungicides in winter wheat. 1. Grain yield and foliar disease control. *The Journal of Agricultural Science,* 2003, vol. 140, 1-13
- **OLIVER, RP ; SVS IPCHO.** Arabidopsis pathology breathes new life into the necrotrophs-vs.-biotrophs classification of fungal pathogens. *Mol. Plant Pathol.,* 2004, vol. 5, 347-352
- **PITCHAY, DL ; JM FRANTZ ; JC LOCKE ; GCJ FERNANDEZ.** Impact of applied nitrogen concentration on growth of Elatior begonia and New Guinea impatiens and susceptibility of begionia to Botrytis cinerea. *J. Amer. Soc. Hort.Sci.,* 2007, vol. 132, 193-201
- **SHANER, G. ; R. E. FINNEY.** The effect of nitrogen fertilization on the expression of slow-mildewing resistance in Knox wheat. *Phytopathology,* 1977, vol. 67, 1051-1056
- **REUVENI, M. ; AGAPOV, V. ; REUVENI, R.** Suppression of cucumber powdery mildew (Sphaerotheca fuliginea) by foliar spray of phosphate and potassium salts. *Plant Pathology,* 1995, vol. 44, 31-39
- **REUVENI, M. ; REUVENI, R.** Efficacy of foliar sprays of Phosphates in controlling Powdery Mildews in field-grown nectarine, mango trees and grapevines. *Crop Protection,* 1995, vol. 14, 311-314
- **REUVENI, R. ; REUVENI, M. ; AGAPOV, V.** Foliar sprays of NPK fertilizers induce systemic protection against Puccinia sorghi and Exserohilum turcicum and growth response in maize. *Eur. J. Plant Pathol.,* 1996, vol. 102, 339-348
- **REUVENI, M. ; AGAPOV, V. ; REUVENI, R.** A foliar spray of micronutrient solutions induces local and systemic protection against powdery mildew (Sphaerotheca fuliginea) in cucumber plants. *European Journal of Plant Pathology,* 1997, vol. 103, 581-588
- **REUVENI, R. ; REUVENI, M.** Foliar-fertilizers therapy - A concept in Integrated Pest Management. *Crop Protection,* 1998, vol. 17, 111-118
- **STILES, W ; GS ADAIR.** LXXV. The penetration of electrolytes into gels. III. The influence of the concentration of the gel on the coefficient of diffusion of sodium chloride. *Biochem J.,* 1921, vol. 15 (5), 629-635
- **TAVERNIER, V. ; S CADIOU ; K PAGEAU ; R LAUGÉ ; M REISDORF-CREN ; T LANGIN ; C MASCLAUX-DAUBRESSE.** The plant nitrogen mobilization promoted by Colletotrichum lindemuthianum in Phaseolus leaves depends on fungus pathogenicity. *J. Experimental Botany,* 2007, vol. 58, 3351-3360
- **WILCOXSON, R. D.** Effects of fertilizers on slow rusting in wheat. *Phytopathology,* 1980, vol. 70, 930-932
- **YOHALEM, DS ; K. PAASKE ; K. KRISTENSEN ; J. LARSEN.** Single application prophylaxis against gray mold in pot rose and pelargonium with Ulocladium atrum. *Biological Control,* 2007, vol. 41, 94-98

- **ZIADI, N ; M. BRASSARD ; G. BÉLANGER ; A. CLAESSENS ; N. TREMBLAY ; A.N. CAMBOURIS ; M. C. NOLIN ; L.E. ÉTIENNE PARENT.** Chlorophyll Measurements and Nitrogen Nutrition Index for the Evaluation of Corn Nitrogen Status. *Agron. J.,* 2008, vol. 100, 1264-1273

- **ZIADI, N. ; G. BÉLANGER ; F. GASTAL ; A. CLAESSENS ; G. LEMAIRE ; N. TREMBLAY.** Leaf Nitrogen Concentration as an Indicator of Corn Nitrogen Status. *Agron. J.,* 2009, vol. 101, 947-957